# EUROPEAN PATENT APPLICATION

(11) **EP 4 459 918 A1**
(43) Date of publication of application: **06.11.2024**
(21) Application number: 22916742.4
(22) Date of filing: 28.12.2022
(51) Int. Cl.: H04L 5/00, H04W 24/10, H04W 72/23

(54) **METHOD FOR OPERATION OF DEVICE IN WIRELESS COMMUNICATION SYSTEM AND DEVICE USING SAME METHOD**

(30) Priority: 30.12.2021 KR 20210192923
(71) Applicant: LG Electronics Inc., Yeongdeungpo-gu Seoul 07336 (KR)
(72) Inventor: YOU, Hyangsun, Seoul 06772 (KR); KIM, Seonwook, Seoul 06772 (KR); KO, Hyunsoo, Seoul 06772 (KR); SHIM, Jaenam, Seoul 06772 (KR)
(74) Representative: Maikowski & Ninnemann Patentanwälte Partnerschaft mbB
(86) International application number: PCT/KR2022/021489
(87) International publication number: WO 2023/128601

(57) **Abstract**

A device and a method for operation of a device in a wireless communication system are provided. The device may be a terminal, a chipset, or a base station. A terminal receives, from a base station, a CSI-RS configuration message indicating CSIRS frequency resources in which a CSI-RS is transmitted, and a full duplex configuration message indicating an FD time resource operating in full duplex and at least one of a DL frequency resource used in downlink in the FD time resource and a UL frequency resource used in uplink, and then determines whether to measure the CSI-RS, on the basis of the CSI-RS configuration message and the full duplex configuration message.

## Description

### TECHNICAL FIELD

This disclosure relates to a method of operating a device in a wireless communication system and a device using the method.

### BACKGROUND ART

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new radio access technology (new RAT or NR) in the present disclosure for convenience.

In NR, full duplex (FD) operation can be performed. When performing FD operation, downlink reception and uplink transmission can occur simultaneously in a given time resource. Half duplex (HD) operation differs in that only one of downlink reception and uplink transmission can be performed in a given time resource. For FD operation, i) in the same time resource, some frequency resources may be allocated to downlink subbands and other frequency resources to uplink subbands, or ii) frequency resources may be allocated that can be used for both downlink reception and uplink transmission in the same time resource. The above i) may be referred to as SB-FD (subband-wise full duplex), and the above ii) may be referred to as SS-FD (spectrum-sharing full duplex).

In the prior art, frequency resources within a given band are used for either all downlink or all uplink at any given time. Therefore, the user equipment (UE) may determine that the resources set to receive a downlink reference signal (DL RS) (or the resources set to transmit an uplink (UL) reference signal) are all available for downlink reception (or uplink transmission) and perform transmission and reception.

On the other hand, in an environment with FD operation, such as an environment with SB-FD operation, there may be situations where some frequency resources are used for an uplink in the time resource where the cell is operating as a downlink, or some frequency resources are used for a downlink in the time resource where the cell is operating as an uplink.

Conventionally, the transmission resources of a reference signal, such as a channel state information reference signal (CSI-RS), are set as contiguous frequency resources by the CSI-RS-related configurations. In the time resource for performing the SB-FD operation, some of the frequency resources set for transmission of the CSI-RS may overlap with the uplink subband. In this case, CSI-RS cannot be transmitted properly in the uplink subband. If the terminal nevertheless performs measurements for radio resource management (RRM) or time/frequency tracking on the transmission resources of CSI-RS including the uplink subband based on the above CSI-RS related settings, it shall not be able to perform proper measurements or time/frequency tracking.

### DISCLOSURE

### TECHNICAL PROBLEM

The technical problem that the present disclosure aims to solve is to provide a method of operating a device in a wireless communication system and a device that uses the method.

### TECHNICAL SOLUTION

In one aspect, provided is a method of operating a user equipment (UE) in a wireless communication system. The method includes performing an initial access procedure with the base station, that is, performing a cell search, system information obtaining, and a random access procedure, and receiving a channel state information reference signal (CSI-RS) configuration message, the CSI-RS configuration message informing a starting resource block and a number of resource blocks of CSI-RS frequency resources where a CSI-RS is transmitted, receiving a full duplex (FD) configuration message, the FD configuration message informing an FD time resource operated in full duplex and at least one of a downlink (DL) frequency resource used for a DL and an uplink (UL) frequency resource used for a UL in the FD time resource, and determining, based on the CSI-RS configuration message and the FD configuration message, whether to measure the CSI-RS. In the FD time resource, i) based on a ratio of overlap of the CSI-RS frequency resources informed by the CSI-RS configuration message with the UL frequency resource being below a threshold, the UE measures the CSI-RS within the FD time resource, and ii) based on the ratio of overlap of the CSI-RS frequency resources informed by the CSI-RS configuration message with the UL frequency resource being equal or above the threshold, the UE skips measuring the CSI-RS within the FD time resource.

In another aspect, provided is a user equipment (UE). The UE includes a transceiver, at least one memory, and at least one processor operably coupled to the at least one memory and the transceiver. The processor performs the method.

In still another aspect, provided is an apparatus of a user equipment (UE). The apparatus includes at least one memory and at least one processor operably coupled to the at least one memory. The processor performs the method.

In still another aspect, provided is at least one computer readable medium (CRM) having instructions to be executed by at least one processor to perform operations.

In still another aspect, provided is a method of operating a base station in a wireless communication system. The method includes performing a random access procedure with a user equipment (UE), transmitting a channel state information reference signal (CSI-RS) configuration message to the UE, the CSI-RS configuration message informing a starting resource block and a number of resource blocks of CSI-RS frequency resources where a CSI-RS is transmitted, transmitting a full duplex (FD) configuration message to the UE, the FD configuration message informing an FD time resource operated in full duplex and at least one of a downlink (DL) frequency resource used for a DL and an uplink (UL) frequency resource used for a UL in the FD time resource, transmitting the CSI-RS to the UE and receiving a measurement result of the CSI-RS from the UE. Here, whether to receive the measurement result of the CSI-RS in the FD time resource depends on a ratio of overlap of the CSI-RS frequency resources informed by the CSI-RS configuration message with the UL frequency resource.

In still another aspect, provided is a base station (BS) comprising: a transceiver, at least one memory and at least one processor operably coupled to the at least one memory and the transceiver. The processor performs the method.

### ADVANTAGEOUS EFFECTS

In systems supporting full duplex operation, e.g. SB-FD, RRM measurements and time/frequency tracking can be performed more accurately without changing the conventional reference signal setup. This means that the accuracy of RRM measurements and time/frequency tracking can be improved, resulting in increased communication efficiency of the wireless communication system.

### BRIEF DESCRIPTION OF THE DRAWINGS

FIG. 1 illustrates a wireless communication system to which the present disclosure can be applied.
FIG. 2 is a block diagram showing the radio protocol architecture for the user plane.
FIG. 3 is a block diagram showing the radio protocol structure for the control plane.
FIG. 4 illustrates the system structure of a next-generation radio access network (NG-RAN) to which NR is applied.
FIG. 5 illustrates the functional division between NG-RAN and 5GC.
FIG. 6 illustrates a frame structure that can be applied in NR.
FIG. 7 illustrates the slot structure of an NR frame.
FIG. 8 illustrates the CORESET.
FIG. 9 shows an example of a frame structure for a new wireless access technology.
FIG. 10 illustrates the structure of a self-contained slot.
FIG. 11 illustrates physical channels and typical signal transmission.
FIG. 12 shows examples of how to apply full duplex within an intra-carrier.
FIG. 13 shows an example in which a time resource operating in half duplex (HD) and a time resource operating in full duplex (FD) such as SB-FD or SS-FD exist together.
FIG. 14 shows examples of first time resource, second time resource, first frequency resource and second frequency resource.
FIG. 15 shows an example of CSI-RS composed of non-contiguous PRB resources.
FIG. 16 is an example of a method of operating a UE in a wireless communication system.
FIG. 17 illustrates CSI-RS frequency resources configured for the UE, CSI-RS frequency resources that overlap with UL frequency resources, and CSI-RS frequency resources that do not overlap with UL frequency resources.
FIG. 18 illustrates the operation between the base station and the UE.
FIG. 19 illustrates a wireless device that can be applied the present specification.
FIG. 20 shows an example of a signal processing module structure.
FIG. 21 shows another example of the structure of a signal processing module in a transmission device.
FIG. 22 shows an example of a wireless communication device according to an implementation example of the present disclosure.
FIG. 23 shows an example of the processor 2000.
FIG. 24 shows an example of the processor 3000.
FIG. 25 shows another example of a wireless device.
FIG. 26 shows another example of a wireless device applied to the present specification.
FIG. 27 illustrates a hand-held device applied to the present specification.
FIG. 28 illustrates the communication system 1 applied to this specification.

### MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

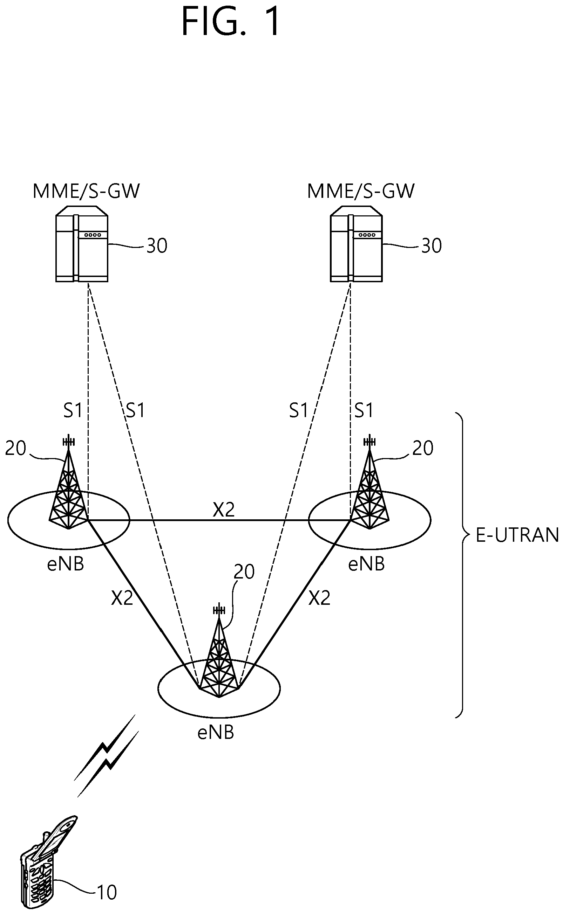

FIG. 1 illustrates a wireless communication system to which the present disclosure can be applied. This may also be called E-UTRAN (Evolved-UMTS Terrestrial Radio Access Network), or LTE (Long Term Evolution)/LTE-A system.

The E-UTRAN includes a base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, terminal etc. The BS 20 is generally a fixed station that communicates with the UE 10 and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

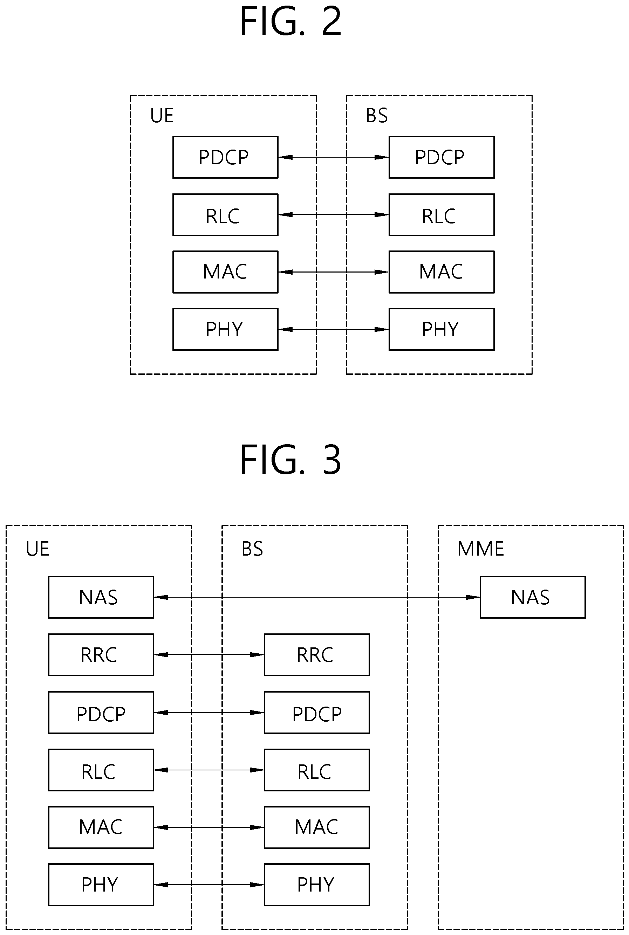

FIG. 2 is a block diagram showing the radio protocol architecture for the user plane. FIG. 3 is a block diagram showing the radio protocol structure for the control plane. The user plane is a protocol stack for user data transmission. The control plane is a protocol stack for control signal transmission.

Referring to FIG. 2 and FIG. 3, a PHY layer provides an upper layer (=higher layer) with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new RAT or NR in the present disclosure for convenience.

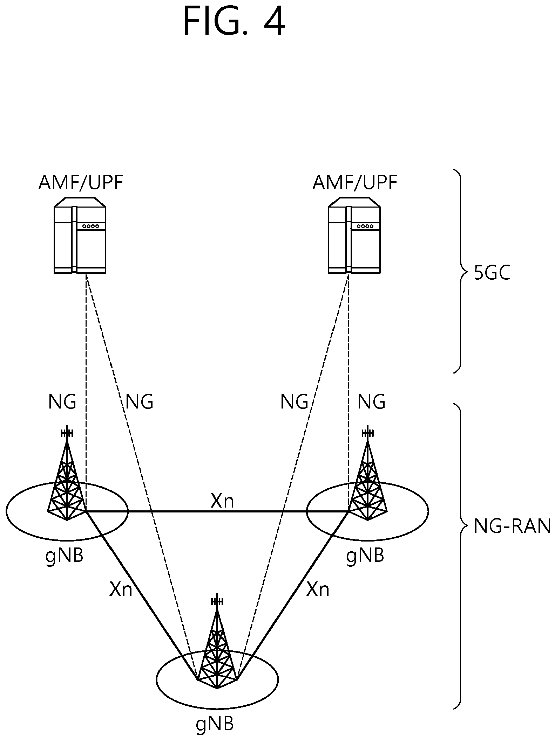

FIG. 4 illustrates a system structure of a next generation radio access network (NG-RAN) to which NR is applied.

Referring to FIG. 4, the NG-RAN may include a gNB and/or an eNB that provides user plane and control plane protocol termination to a UE. FIG. 4 illustrates the case of including only gNBs. The gNBs(eNBs) are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

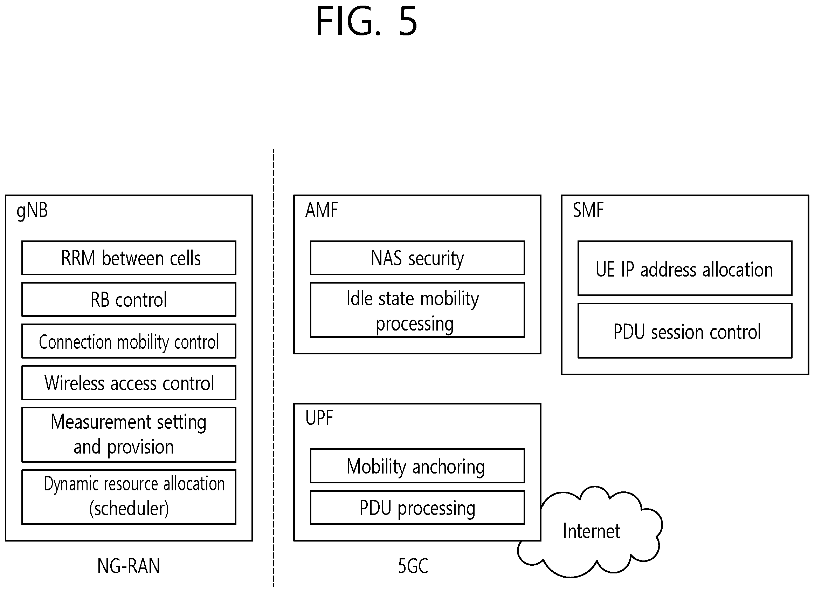

FIG. 5 illustrates a functional division between an NG-RAN and a 5GC.

Referring to FIG. 5, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

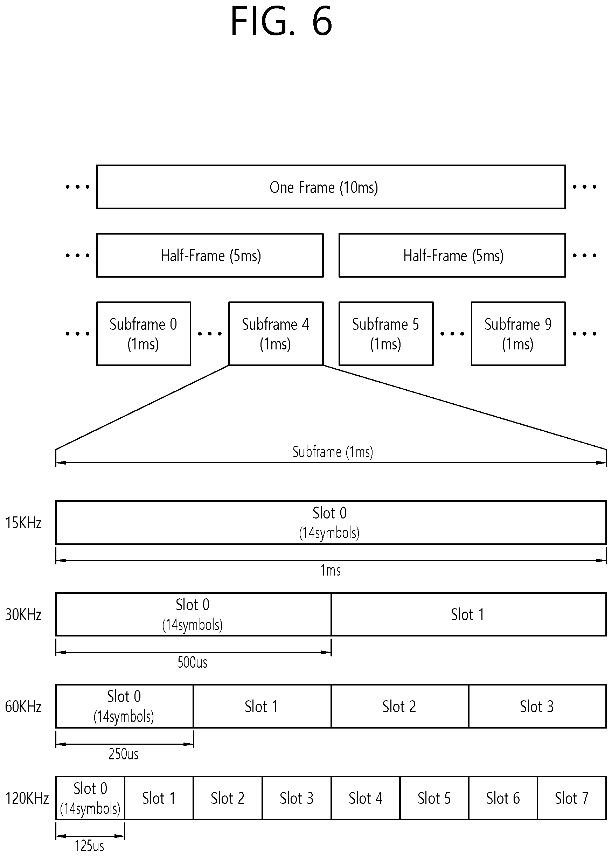

FIG. 6 illustrates an example of a frame structure that may be applied in NR.

Referring to FIG. 6, in the NR, a radio frame (hereinafter, also referred to as a frame) may be used in uplink and downlink transmissions. The frame has a length of 10ms, and may be defined as two 5ms half-frames (HFs). The HF may be defined as five 1ms subframes (SFs). The SF may be divided into one or more slots, and the number of slots within the SF depends on a subcarrier spacing (SCS). Each slot includes 12 or 14 OFDM(A) symbols according to a cyclic prefix (CP). In case of using a normal CP, each slot includes 14 symbols. In case of using an extended CP, each slot includes 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following table 1 illustrates a subcarrier spacing configuration µ.

**[Table 1]**

| µ | Δf = 2^{µ}·15[kHz] | Cyclic prefix |
|---|---|---|
| 0 | 15 | Normal |
| 1 | 30 | Normal |
| 2 | 60 | Normal |
| | | Extended |
| 3 | 120 | Normal |
| 4 | 240 | Normal |

The following table 2 illustrates the number of slots in a frame (N^{frame,µ}ₛₗₒₜ), the number of slots in a subframe (N^{subframe,µ}ₛₗₒₜ), the number of symbols in a slot (N^{slot}_{symb}), and the like, according to subcarrier spacing configurations µ.

**[Table 2]**

| µ | N^{slot}_{symb} | N^{frame,u}ₛₗₒₜ | N^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

FIG. 6 illustrates a case of µ=0, 1, 2, 3.

Table 2-1 below illustrates that the number of symbols per slot, the number of slots per frame, and the number of slots per subframe vary depending on the SCS, in case of using an extended CP.

**[Table 2-1]**

| µ | N^{slot}_{symb} | N^{frame,u}ₛₗₒₜ | N^{subframe,u}ₛₗₒₜ |
|---|---|---|---|
| 2 | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

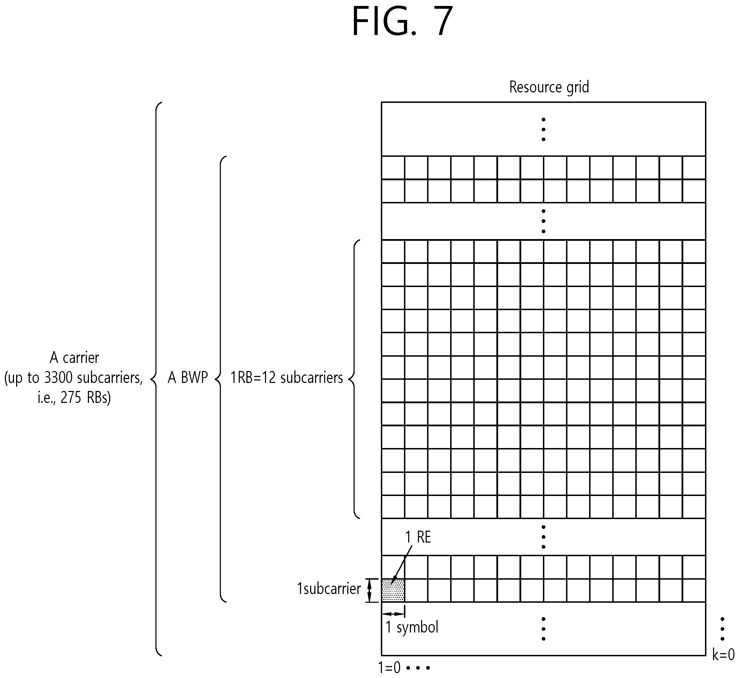

FIG. 7 illustrates a slot structure.

A slot may include a plurality of symbols in a time domain. For example, in case of a normal CP, one slot may include 14 symbols (or 7 symbols). However, in case of an extended CP, one slot may include 12 symbols (or 6 symbols). A carrier may include a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (physical) resource blocks ((P)RBs) in the frequency domain, and the BWP may correspond to one numerology (e.g., SCS, CP length, and so on). The carrier may include up to N (e.g., 5) BWPs. Data communication may be performed via an active BWP, and only one BWP may be activated for one UE. In a resource grid, each element may be referred to as a resource element (RE), and one complex symbol may be mapped thereto.

A physical downlink control channel (PDCCH) may include one or more control channel elements (CCEs) as illustrated in the following table 3.

**[Table 3]**

| **Aggregation level** | **Number of CCEs** |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring implies decoding of each PDCCH candidate according to a downlink control information (DCI) format. The UE monitors a set of PDCCH candidates in one or more CORESETs (to be described below) on an active DL BWP of each activated serving cell in which PDCCH monitoring is configured, according to a corresponding search space set.

A new unit called a control resource set (CORESET) may be introduced in the NR. The UE may receive a PDCCH in the CORESET.

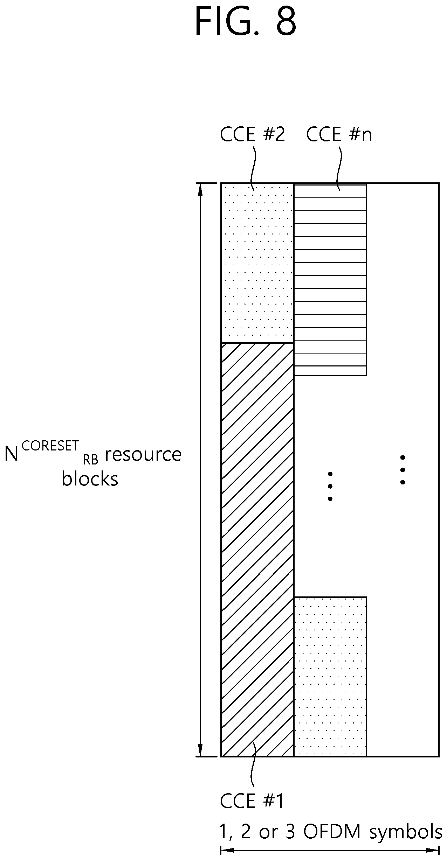

FIG. 8 illustrates CORESET.

Referring to FIG. 8, the CORESET includes N^{CORESET}_{RB} number of resource blocks in the frequency domain, and N^{CORESET}_{symb} ∈ {1, 2, 3 } number of symbols in the time domain. N^{CORESET}_{RB} and N^{CORESET}_{symb} may be provided by a base station via higher layer signaling. As illustrated in FIG. 8, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the related art wireless communication system (e.g., LTE/LTE-A) is configured over the entire system band used by a base station (BS). All the UEs, excluding some (e.g., eMTC/NB-IoT UE) supporting only a narrow band, shall be able to receive wireless signals of the entire system band of the BS in order to properly receive/decode control information transmitted by the BS.

On the other hand, in NR, CORESET described above was introduced. CORESET is radio resources for control information to be received by the UE and may use only a portion, rather than the entirety of the system bandwidth. The BS may allocate the CORESET to each UE and may transmit control information through the allocated CORESET. In the NR, the UE may receive control information from the BS, without necessarily receiving the entire system band.

The CORESET may include a UE-specific CORESET for transmitting UE-specific control information and a common CORESET for transmitting control information common to all UEs.

On the other hand, NR may require high reliability depending on the application field. In this situation, the target block error rate (BLER) for downlink control information (DCI) transmitted through a downlink control channel (e.g., physical downlink control channel: PDCCH) may be significantly lower than that of the prior art. As an example of a method to satisfy the requirement for such high reliability, the amount of content included in DCI can be reduced and/or the amount of resources used when transmitting DCI can be increased. At this time, the resources may include at least one of resources in the time domain, resources in the frequency domain, resources in the code domain, and resources in the spatial domain.

In NR, the following technologies/features can be applied.

### <Self-contained subframe structure>

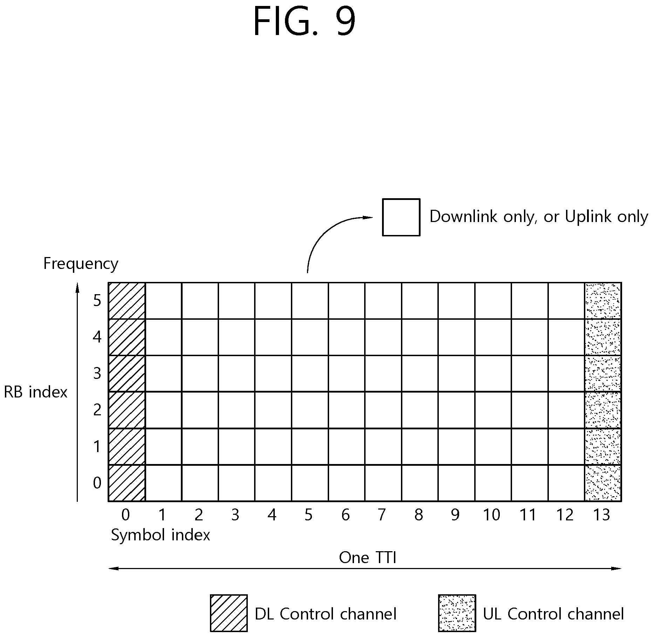

FIG. 9 shows an example of a frame structure for a new wireless access technology.

In NR, as shown in FIG. 9, a structure in which a control channel and a data channel are time-division-multiplexed within one TTI can be considered as a frame structure in order to minimize latency.

In FIG. 9, the hatched area represents the downlink control area, and the black portion represents the uplink control area. An unmarked area may be used for transmitting downlink data (DL data) or may be used for transmitting uplink data (UL data). The characteristic of this structure is that downlink (DL) transmission and uplink (UL) transmission proceed sequentially within one subframe, DL data can be transmitted within a subframe and UL ACK/NACK (Acknowledgement/Not-acknowledgement) can also be received. As a result, the time it takes to retransmit data when a data transmission error occurs is reduced, thereby minimizing the latency of final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

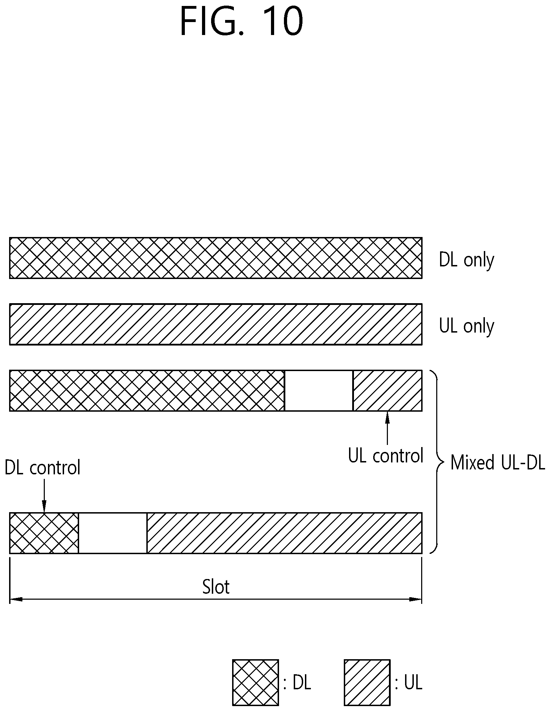

FIG. 10 illustrates a structure of a self-contained slot.

In an NR system, a DL control channel, DL or UL data, a UL control channel, and the like may be contained in one slot. For example, first N symbols (hereinafter, DL control region) in the slot may be used to transmit a DL control channel, and last M symbols (hereinafter, UL control region) in the slot may be used to transmit a UL control channel. N and M are integers greater than or equal to 0. A resource region (hereinafter, a data region) which exists between the DL control region and the UL control region may be used for DL data transmission or UL data transmission. For example, the following configuration may be considered. Respective durations are listed in a temporal order.
1. DL only configuration,
2. UL only configuration,
3. Mixed UL-DL configuration:
   DL region + Guard period (GP) + UL control region,
   DL control region + GP + UL region.
   DL region: (i) DL data region, (ii) DL control region + DL data region.
   UL region: (i) UL data region, (ii) UL data region + UL control region.

A PDCCH may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Downlink control information (DCI), for example, DL data scheduling information, UL data scheduling information, and the like, may be transmitted on the PDCCH. Uplink control information (UCI), for example, ACK/NACK information about DL data, channel state information (CSI), and a scheduling request (SR), may be transmitted on the PUCCH. A GP provides a time gap in a process in which a BS and a UE switch from a TX mode to an RX mode or a process in which the BS and the UE switch from the RX mode to the TX mode. Some symbols at the time of switching from DL to UL within a subframe may be configured as the GP.

### <Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of 5×5 cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

### <Analog beamforming #2>

When a plurality of antennas is used in NR, hybrid beamforming which is a combination of digital beamforming and analog beamforming is emerging. Here, in analog beamforming (or RF beamforming) an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting manner. In this case, in one symbol, analog beams belonging to different antenna panels may be simultaneously transmitted. A scheme of introducing a beam RS (BRS) which is a reference signal (RS) transmitted by applying a single analog beam (corresponding to a specific antenna panel) is under discussion to measure a channel per analog beam. The BRS may be defined for a plurality of antenna ports, and each antenna port of the BRS may correspond to a single analog beam. In this case, unlike the BRS, a synchronization signal or an xPBCH may be transmitted by applying all analog beams within an analog beam group so as to be correctly received by any UE.

In the NR, in a time domain, a synchronization signal block (SSB, or also referred to as a synchronization signal and physical broadcast channel (SS/PBCH)) may consist of 4 OFDM symbols indexed from 0 to 3 in an ascending order within a synchronization signal block, and a PBCH associated with a primary synchronization signal (PSS), secondary synchronization signal (SSS), and demodulation reference signal (DMRS) may be mapped to the symbols. As described above, the synchronization signal block may also be represented by an SS/PBCH block.

In NR, since a plurality of synchronization signal blocks(SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, beams may be used for transmission and reception. If reception performance of a current serving beam is degraded, a process of searching for a new beam through the so-called Beam Failure Recovery (BFR) may be performed.

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process associated with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.
1) CORESET index p (one of 0 to 11, where index of each CORESET may be determined uniquely among BWPs of one serving cell),
2) PDCCH DM-RS scrambling sequence initialization value,
3) Duration of a CORESET in the time domain (which may be given in symbol units),
4) Resource block set,
5) CCE-to-REG mapping parameter,
6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),
7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have went through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

**[Table 4]**

| QCL Type | Description |
|---|---|
| QCL-TypeA | Doppler shift, Doppler spread, Average delay, Delay spread |
| QCL-TypeB | Doppler shift, Doppler spread |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDCCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.

1) search space set index s (0≤s<40), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORSET in a slot for PDCCH monitoring), 5) the number of slots in which the search space set s exists, 6) the number of PDCCH candidates per CCE aggregation level, 7) information indicating whether the search space set s is CSS or USS.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

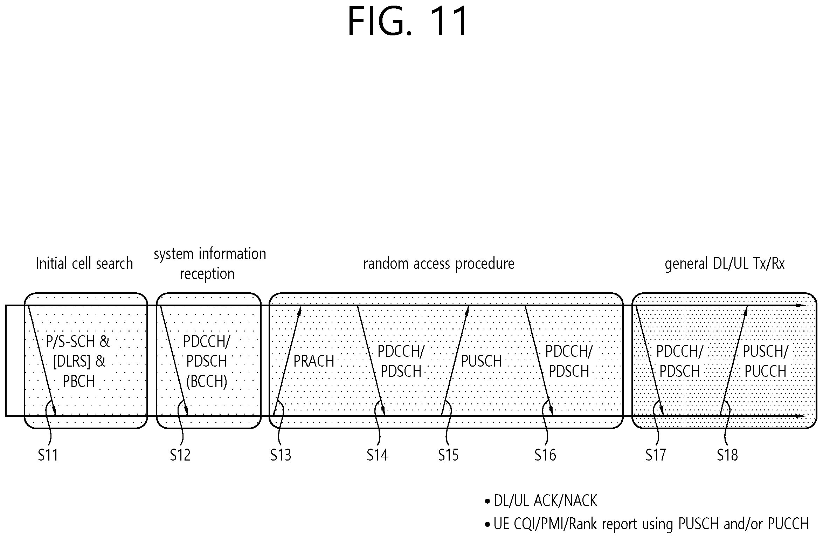

FIG. 11 illustrates physical channels and typical signal transmission.

Referring to FIG. 11, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

(Initial) cell search can be said to be a procedure in which the UE obtains time and frequency synchronization with a cell and detects the cell ID of the cell. Cell search may be based on the cell's primary synchronization signal and secondary synchronization signal, and PBCH DMRS.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure similarly to the PDCCH and the PDSCH corresponding thereto (this can be said to be the process of receiving a competition resolution message) (S16).

After performing the aforementioned procedure, the UE may perform PDCCH/PDSCH reception (S17) and PUSCH/physical uplink control channel (PUCCH) transmission (S 18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/instruction of a network.

In order to enable reasonable battery consumption when bandwidth adaptation (BA) is configured, only one uplink BWP and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. Hereinafter, for convenience of description, a proposed method will be described based on a new RAT (NR) system. However, the range of the system to which the proposed method is applied is expandable to other systems such as 3GPP LTE/LTE-A systems in addition to the NR system.

One of the potential technologies aimed at enabling future cellular network deployment scenarios and applications is support for wireless backhaul and relay links, and it enables flexible and highly dense deployment of NR cells without the need to proportionally densify the transport network.

It is expected that greater bandwidth in NR compared to LTE will be available (e.g., mmWave spectrum) with the native deployment of massive MIMO or multi-beam systems, thus, occasions are created for the development and deployment of integrated access and backhaul links. This makes it easier of a dense network of self-backhauled NR cells in a more integrated manner by establishing multiple control and data channels/procedures defined to provide access or access to the UEs. Such systems are referred to as integrated access and backhaul links (IAB).

This disclosure defines the following.
- AC (x): an access link between the node (x) and the UE(s).
- BH (xy): a backhaul link between the node (x) and the node (y).

In this case, the node may mean a donor gNB (DgNB) or a relay node (RN). Here, the DgNB or the donor node may be a gNB that provides a function to support backhaul to IAB nodes.

When relay node 1 and relay node 2 exist, relay node 1 which is connected to relay node 2 by a backhaul link and relaying data transmitted and received to relay node 2 is called a parent node of relay node 2, and relay node 2 is called a child node of relay node 1.

Technical features described individually in one drawing in this specification may be implemented individually or simultaneously.

The following drawings were prepared to explain a specific example of the present specification. Since the names of specific devices or specific signals/messages/fields described in the drawings are provided as examples, the technical features of this specification are not limited to the specific names used in the drawings below.

Now, full duplex operation will be described.

In 5G, new service types such as extended reality (XR), artificial intelligence-based service, and self-driving car are emerging. These services have characteristics that dynamically change traffic in both downlink (DL) and uplink (UL) directions, and require low latency for traffic (e.g., packets) to be transmitted. In 5G services, traffic will increase explosively to support these various new use cases.

Existing semi-static or dynamic TDD (Time Division Duplexing) UL/DL configurations have limitations such as transmission time delay and interference between operators. The existing FDD (Frequency Division Duplexing) method has limitations in terms of efficient frequency resource utilization in the DL/UL direction. Therefore, for low latency and efficient resource utilization in NR, the introduction of full duplex operation within a single carrier is being discussed.

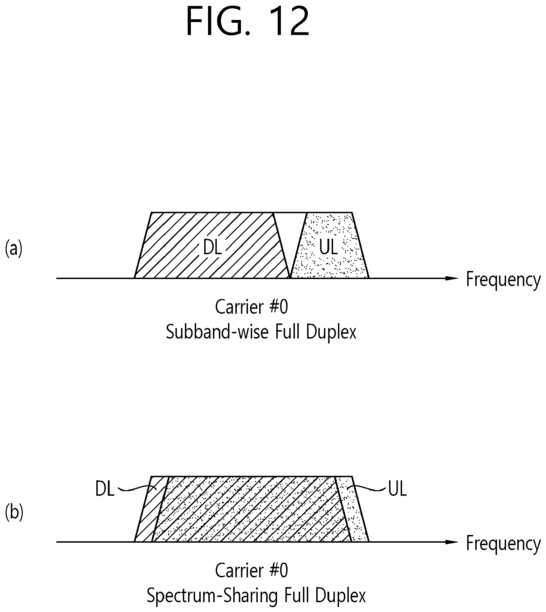

FIG. 12 shows examples of how to apply full duplex within an intra-carrier.

Referring to FIG. 12, the full duplex method includes subband-wise full duplex (hereinafter referred to as SB-FD) as shown in (a) of FIG. 12 and spectrum sharing full duplex (hereinafter referred to as SS-FD as shown in (b) of FIG. 12 may be considered.

In the case of SB-FD, in a specific time, DL and UL can be transmitted and received through different frequency resources within the same carrier (e.g., carrier #0). That is, different frequency resources can be used in DL and UL for the same time resource.

In the case of SS-FD, in a specific time, DL and UL can be transmitted and received through the same or fully/partially overlapped frequency resources within the same carrier (e.g., carrier #0). That is, the same or overlapping frequency resources can be used in DL and UL for the same time resource.

This full-duplex (FD) operation can also be used in combination with the existing half-duplex (HD) operation. For example, among time resources used for existing half-duplex-based TDD operation, some time resources may be used for full duplex operation. SB-FD or SS-FD operations can be performed on time resources that perform full duplex operations.

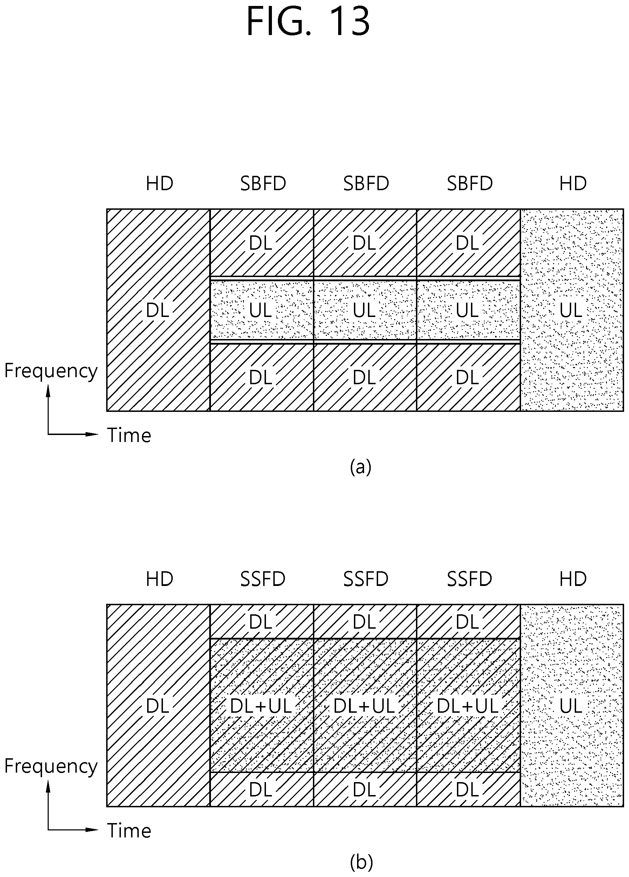

FIG. 13 shows an example in which a time resource operating in half duplex (HD) and a time resource operating in full duplex (FD) such as SB-FD or SS-FD exist together.

In (a) of FIG. 13, some time resources operating as SB-FD (=SBFD) are indicated as SBFD, and time resources operating as HD are indicated as HD. In (b) of FIG. 13, some time resources operating as SS-FD (=SSFD) are indicated as SSFD, and time resources operating as HD are indicated as HD. The unit of time resource may be, for example, frame, subframe, a slot or symbol.

In time resources operating as SB-FD, some frequency resources are used as DL resources, and other frequency resources are used as UL resources. Between the DL frequency resource and the UL frequency resource, there may be a guard subband that is unused and empty for both DL and UL. Guard subbands may also be referred to by other terms, such as guard frequency resources or guard subcarrier(s).

In time resources operating with SS-FD, the entire frequency resource can be used for both DL and UL. Or, to reduce the impact of interference from other adjacent carriers (this may be referred to as ACI (adjacent carrier interference)), Some frequency resources at one or both ends of the carrier may not be used for DL and/or UL. That is, one or both ends of the carrier can be used as an unused guard band (guard subband) for both DL and UL. Alternatively, to reduce ACI on UL reception, one or both ends of the carrier may be used only for DL transmission.

In below, a slot resource that operate as HD may be referred to as a HD slot, and a slot resource that operate as SB-FD and a slot resource that operate as SS-FD may be referred to as a SB-FD slot and a SS-FD slot, respectively. The SS-FD slot and the SS-FD slot may be also collectively referred to as FD slots.

In the present disclosure, in time resources operating in FD, among all frequency resources, frequency resources operating in DL are referred to as a DL subband, and frequency resources operating in UL are also referred to as an UL subband, for convenience.

In the case of full duplex operation, both the base station and the UE can perform full duplex operation. That is, both the base station and the UE can simultaneously perform DL and UL transmission and reception using the same or different frequency resources in the same time resource.

Alternatively, only the base station can perform full duplex operation and the UE can perform half duplex operation. The base station can simultaneously perform transmission and reception of DL and UL using the same or different frequency resources in the same time resource, but the UE only performs DL reception or UL transmission in a specific time resource. In this case, the base station performs full duplex operation by performing DL transmission and UL reception with different UEs at the same time.

The content of the present disclosure is described assuming that the base station performs/supports a full duplex operation, but the UE performs/supports a half duplex operation. However, the content of the present disclosure can be applied even when both the base station and the UE perform/support full duplex operation.

Based on the above discussion, this disclosure proposes a method for setting up downlink (DL) and uplink (UL) resources for intra-carrier full duplex operation.

In the following, the term network may be interpreted as gNB or CU/DU. The term UE may also be interpreted as MT of an IAB-node.

A. Characteristics of DL/UL time/frequency resources for SB-FD and SS-FD operation

This disclosure assumes that a cell (base station) can perform both DL transmission and UL reception in the same time resource in an FD scheme such as SB-FD or SS-FD. For example, the base station may perform HD operation in a first time resource and FD operation in a second time resource (which may be a time resource other than the first time resource).

The first time resource performing HD operation performs DL operation or UL operation across the frequency resources that comprise the entire system bandwidth. Within the first time resource performing the HD operation, the network performs the DL operation through the 1-1 time resource and the UL operation through the 1-2 time resource. At this time, the 1-1 time resource and the 1-2 time resource do not overlap with each other.

In the second time resource performing the FD operation, the network performs DL operations through all or part of the frequency resources (first frequency resources) among the frequency resources that constitute the system band of the cell, and performs UL operations through all or part of the frequency resources (second frequency resources).

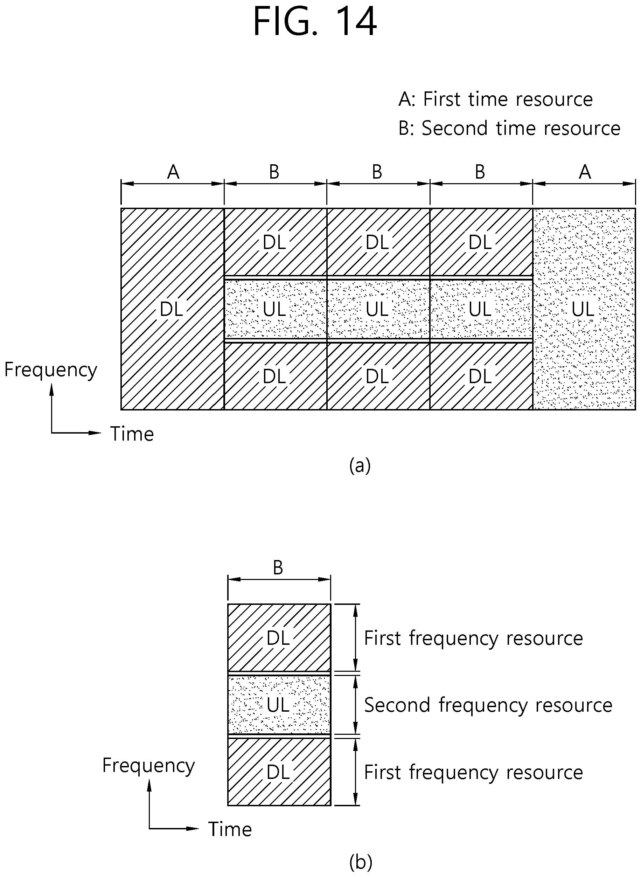

FIG. 14 shows examples of a first time resource, a second time resource, a first frequency resource, and a second frequency resource.

Referring to (a) of FIG. 14, the first time resource (represented by A) operates in HD. In the second time resource (represented by B), for example, it can operate as SB-FD. In the first time resource, the resource indicated by DL corresponds to the above-described 1-1 time resource, and the resource indicated by UL corresponds to the above-described 1-2 time resource.

Referring to (b) of FIG. 14, in the second time resource, the frequency resource operating as DL corresponds to the above-described first frequency resource, and the frequency resource operating as UL corresponds to the above-described second frequency resource.

The first frequency resource and/or the second frequency resource may have all or some of the following characteristics.
1) When performing SB-FD operation, the first frequency resource and the second frequency resource do not overlap with each other. This is to ensure that DL and UL operations are performed through different frequency resources. At this time, there may be frequency resources that do not correspond to both the first and second frequency resources, and these frequency resources are called guard subbands or guard frequency resources. These guard frequency resources may be needed to reduce interference from DL transmission on UL reception. The guard frequency resource may be located between the first frequency resource and the second frequency resource.
2) When performing SS-FD operation, the first frequency resource and the second frequency resource may overlap. At this time, there may be frequency resources that do not correspond to both the first and second frequency resources, and these frequency resources are called guard subbands or guard frequency resources. These guard frequency resources may be needed to reduce interference from DL transmission on adjacent carriers to UL reception and/or to reduce interference from DL transmission on UL reception on adjacent carriers.
3) When performing an SB-FD operation, the second frequency resource may be composed of contiguous frequency resources, and the first frequency resource may be composed of non-contiguous frequency resources. At this time, the first frequency resource may be composed of a plurality (e.g.,two) set of contiguous frequency resources. This is to reduce interference from DL transmission on adjacent carriers to UL resources by placing the second frequency resource used for UL at the center of the frequency resources constituting the cell. Conversely, the first frequency resource may be composed of contiguous frequency resources, and the second frequency resource may be composed of non-contiguous frequency resources. At this time, the second frequency resource may be composed of a plurality (e.g.,two) set of contiguous frequency resources. This is to reduce interference from DL transmission on UL resources in adjacent carriers by placing the second frequency resource used for DL at the center of the frequency resources constituting the cell.
4) When performing SS-FD operation, the second frequency resource may be composed of some frequency resources of the first frequency resource. At this time, the second frequency resource may be configured to have fewer X physical resource blocks (PRBs) on one or both edges than the first frequency resource. This is to reduce interference from DL transmission on adjacent carriers to UL reception.

The network determines the 'first time resource' and 'second time resource', and the 'first frequency resource' and 'second frequency resource' as described above, and provides all or part of the corresponding information to the UE. The network performs DL transmission to the UE on ' 1-1 time resource within the first time' and 'first frequency resource within the second time resource', and performs UL reception from the UE on '1-2 time resource within the first time resource' and the 'second frequency resource within the second time resource'.

The UE receives all or part of the information about the 'first time resource' and 'second time resource', and the 'first frequency resource' and 'second frequency resource' as described above from the network, and determines the location of the resource. The UE performs DL reception from the network on all or part of the " 1-1 time resource within the first time resource" and the "first frequency resource within the second time resource", and UL transmission to the network on the " 1-2 time resource within the first time resource" and the "second frequency resource within the second time resource".

In the following, it is proposed a method for configuring resources for downlink (DL) and uplink (UL) reference signals (RS) for intra-carrier full duplex operation.

In the prior art, frequency resources within a particular band are used for all downlink or all uplink at any given time. Therefore, the UE may determine that the resources set to receive the downlink reference signal (DL RS) or transmit the uplink reference signal (UL RS) are all available for downlink reception or uplink transmission and perform transmission and reception.

On the other hand, in FD environments such as SB-FD, SS-FD, etc., some frequency resources may not be available for a downlink in the time resource where the cell is operating as a downlink, or some frequency resources may not be available for an uplink in the time resource where the cell is operating as an uplink. In such a case, when the network sets the resources for the UE to receive DL RS, resources that cannot be used for downlink may be avoided, and when the network sets the resources for the UE to transmit UL RS, the resources that cannot be used for uplink may be avoided. However, when the FD slot and HD slot are changed dynamically, for example, difficulties may arise in setting the frequency resources of the reference signal by avoiding resources that cannot be used for the downlink and resources that cannot be used for the uplink.

Considering this, the present disclosure sets the frequency resources of DL RS and UL RS in consideration of the unused frequency resources, and proposes a RS transmission and reception method considering these frequency resources.

CSI-RS transmission-related content proposed in this disclosure may include both zero power (ZP) CSI-RS and non-zero power (NZP) CSI-RS.

The CSI-RS proposed in this disclosure may include the following.
i) CSI-RS for CSI measurement.
ii) CSI-RS for RRM measurement.
iii) CSI-RS for time/frequency tracking, TRS: Tracking Reference Signal.

### <CSI-RS for CSI measurement>

CSI-RS related configurations (e.g., 'CSI ResourceConfig', 'CSI ReportConfig') for CSI measurement may be, for example, as follows.

'CSI ResourceConfig' can specify what type of reference signal (e.g., nzp-CSI-RS-SSB, csi-IM-Resource) is transmitted. In addition, the type of transmission (periodic, aperiodic, semipersistent) can be set.

'CSI ReportConfig' can specify the 'CSI ResourceConfig' to be used for measurement, and can include a mapping table between the measurement type and the corresponding 'CSR ResourceConfig ID'.

The frequency resource on which the CSI-RS is transmitted may consist of contiguous physical resource block (PRB) resources (i.e., from the RB indicated by 'startingRB' to as many RBs as indicated by 'nrofRBs'), as indicated in the following table.

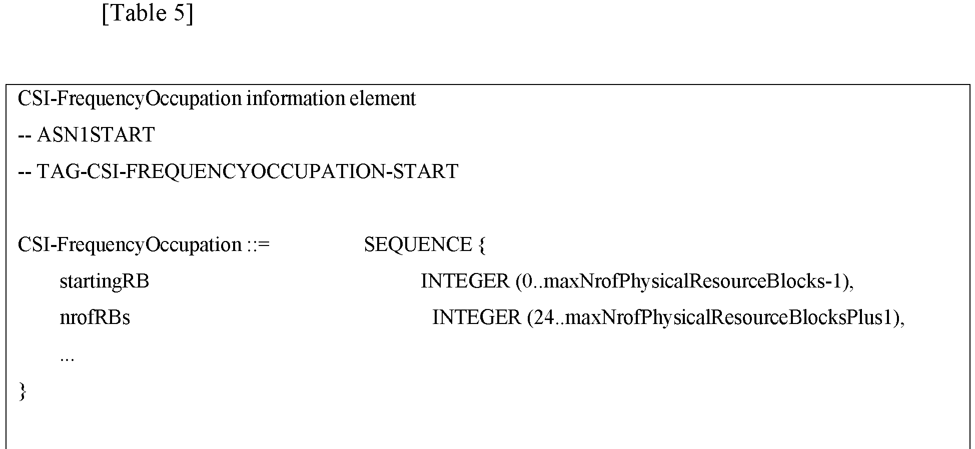

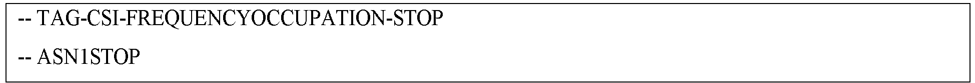

The PRB resources over which CSI-RS is transmitted may be set via the 'CSI-FrequencyOccupation' (see Table 5) within the information element (IE) `CSI-RS-ResourceMapping'. The UE receives the values 'startingRB' and 'nrofRBs' from the network via 'CSI-FrequencyOccupation'. This allows the UE to determine that a contiguous number of 'nrofRBs' (which may be the number indicated by 'nrofRBs', hereinafter all the same) of PRB resources from the PRB resource location indicated by 'startingRB' constitute the CSI-RS transmission resource.

### <CSI-RS for RRM measurement>

Channel state information (CSI)-related measurements include the following:

### 1) CSI-RSRP (Reference Signal Received Power)

CSI-RSRP measurements can be used for connection mode mobility, power control calculations, and beam management. Measurements can be generated and reported at both Layer 1 and Layer 3. For example, a UE may provide CSI-RSRP measurements at Layer 1 when it sends CSI to the base station. Alternatively, the UE may provide CSI-RSRP measurements at Layer 3 when sending RRC measurement reports. CSI-RSRP represents the average power received from a single RE assigned to the CSI-RS. The measurement may be filtered at Layer 1 to remove the effects of noise and improve measurement accuracy.

### 2) CSI-RSRQ (Reference Signal Received Quality)

CSI-RSRQ measurements can be used in mobility procedures. Unlike the RSRP measurement, the RSRQ measurement may not be used when reporting CSI.

CSI-RSRQ can be defined as CSI-RSRQ = CSI-RSRP/(RSSI/N).

Here, N is the number of resource blocks for which the Received Signal Strength Indicator (RSSI) is measured, i.e., RSSI/N defines the RSSI per resource block. RSSI represents the total received power from all sources, including interference and noise. RSRP and RSSI are measured on the same set of resource blocks. RSSI is measured over the duration of symbols containing CSI RS RE.

### 3) CSI-SINR (Signal to interference and Noise Ratio)

CSI-SINR can be used in the connection mode mobility procedure. CSI-SINR represents the ratio of the desired signal power to the interference plus noise power. Both the desired signal power and the interference plus noise power are measured at the RE used by the CSI-RS.

Below, the 'CSI-RS-ResourceConfigMobility' information element in Table 6 can be used to set CSI-RS-based RRM measurement.

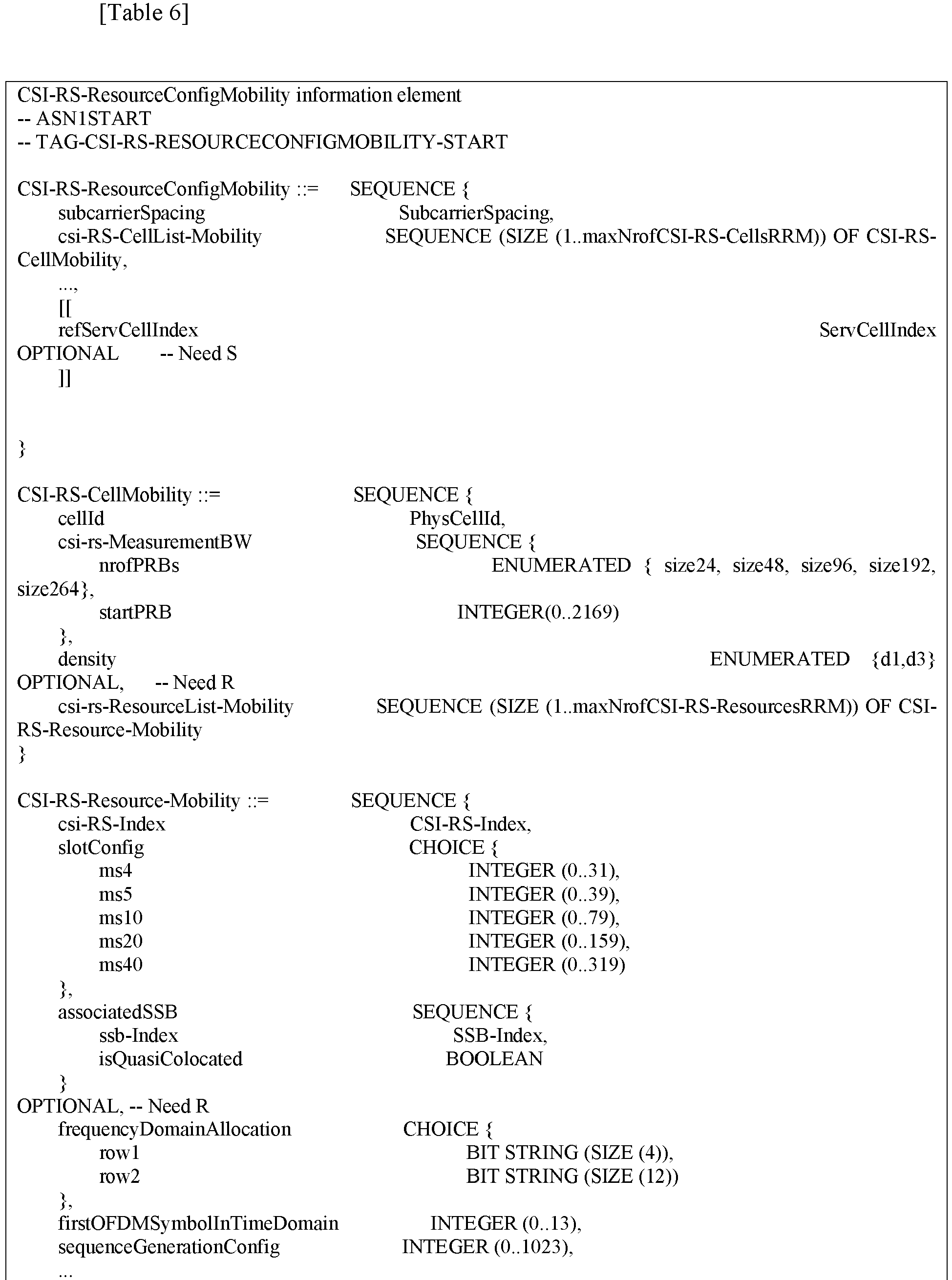

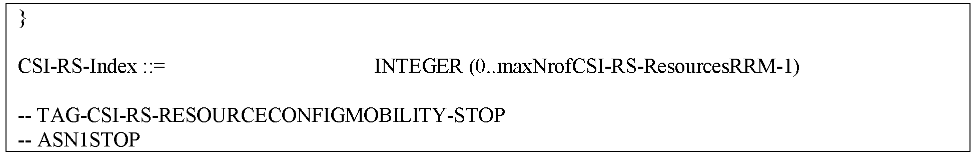

The PRB resource to which CSI-RS for RRM measurement is transmitted is configured via 'csi-rs-MeasurementBW' in 'CSI-RS-CellMobility' in the table above. The UE receives the values of 'startPRB' and 'nrofPRBs' from the network via `csi-rs-MeasurementBW'. This enables the UE to determine that 'nrofPRBs' contiguous PRB resources from the PRB resource location indicated by 'startPRB' constitute the CSI-RS transmission resource.

### <CSI-RS for tracking>

In the present disclosure, CSI-RS for tracking may mean tracking reference signal (TRS).

Oscillators are not realistically perfect and can be flawed. Because of this, the device (e.g., UE) should track and compensate for changes in time and frequency to successfully receive the base station's downlink transmission. To assist the device in this task, a TRS may be configured. The TRS may be a set of resources consisting of a number of periodic non-zero power (NZP)-CSI-RSs. For example, the TRS may comprise CSI-RSs with a certain density located within two consecutive slots. The CRS-RSs within the resource set, i.e., the TRS, may be set at a period of 10, 20, 40, or 80 ms. The set of resource elements (subcarriers and OFDM symbols) used in the TRS may be varied, but there is always a time domain separation of four symbols between two CSI-RSs within a slot. This time domain separation sets a limit on the frequency error that can be tracked. Similarly, frequency domain separation (e.g., separation by four subcarriers) sets a limit on the timing error that can be tracked.

### <5.1. CSI-RS frequency resource setting/determination method considering unavailable frequency resources>

Hereinafter, CSI-RS may include the above-described CSI-RS for CSI measurement, CSI-RS for L1/L3 measurement, or CSI-RS for tracking, and the like.

As mentioned above, in the prior art, CSI-RS consists of contiguous PRB resources. Therefore, all or some of the frequency resources on which the CSI-RS is configured to be transmitted in the FD slot may not be included in the first frequency resource that can be used for downlink. It is possible to reuse the existing CSI-RS configuration approach to ensure that the frequency resources comprising CSI-RS are configured to consist of only the first frequency resource in the FD slot, but this may increase the configuration overhead. Additionally, considering the case where the HD slot and the FD slot are dynamically switched, it may be difficult to avoid overlapping the CSI-RS transmission frequency resource in the FD slot with frequency resources other than the first frequency resource.

Hereinafter, in the FD slot, frequency resources other than the first frequency resource that cannot be used for downlink may be referred to as 'downlink (DL) unavailable frequency resources'.

The frequency resources constituting the CSI-RS may be configured as discontinuous PRB resources.

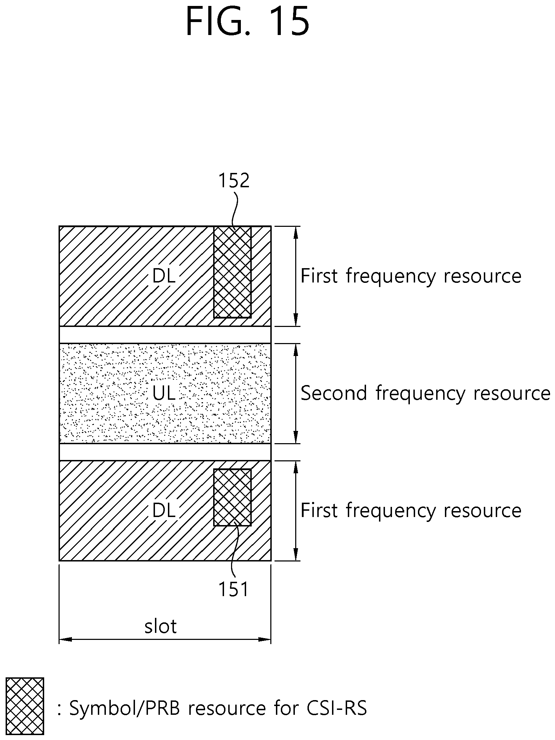

FIG. 15 shows an example of CSI-RS composed of non-contiguous PRB resources.

Referring to FIG. 15, a particular slot may have a mix of first and second frequency resources in the frequency domain. The first frequency resource may be a resource that can be used for downlink, and the second frequency resource may be a resource that cannot be used for downlink, or a frequency resource other than the first frequency resource. For example, the second frequency resource is a resource that can be used for uplink.

Within the specific slot, resources for CSI-RS may be set for a specific symbol in the time domain and resources for CSI-RS may be set for only PRB resources within the first frequency resource in the frequency domain. As a result, the resources for CSI-RS comprise a non-contiguous set of PRB resources.

In at least one of the methods described herein, the network may configure the PRB resources over which CSI-RS is transmitted, and the UE may determine the PRB resources over which CSI-RS is transmitted. After receiving the CSI-RS from the non-contiguous PRB resources, the UE may perform the CSI measurement by excluding unavailable frequency resources that are not used for downlink in the HD slot.

In the following, a method for setting the frequency (e.g., PRB) resources comprising the CSI-RS, taking into account the unavailable frequency resources of the downlink, and a method for determining the frequency (e.g., PRB) resources comprising the CSI-RS by the UE are described.

Method 1. Set up the frequency resources of the CSI-RS with non-contiguous frequency resources.

In the prior art, the frequency resources comprising the CSI-RS are configured as a set of PRBs comprising contiguous PRB resources. For example, a set of PRBs may be configured by means of i) a starting PRB and ii) a number of contiguous PRBs, and CSI-RS may be transmitted within the set of PRBs.

In contrast to this, in the present disclosure, the frequency resources comprising the CSI-RS may comprise a plurality of PRB sets, i.e., the CSI-RS may be transmitted in a plurality of PRB sets, wherein each PRB set comprises a contiguous set of PRB resources, and each PRB set may comprise a different number of PRBs. Further, the PRB resources comprising different PRB sets may be configured to not overlap with each other.

For example, in FIG. 15, of the PRB resources comprising the CSI-RS, the contiguous PRB resources 151 located below the second frequency resource may comprise the first set of PRBs and the contiguous PRB resources 152 located above the second frequency resource may comprise the second set of PRBs. As shown in FIG. 15, the first PRB set and the second PRB set are non-contiguous with respect to each other in the frequency domain. The PRBs in the first PRB set are contiguous in the frequency domain, and the PRBs in the second PRB set are also contiguous in the frequency domain.

For example, in order to set up a plurality of PRB set resources constituting the CSI-RS, 'startingRB' and 'nrofRBs' for a plurality of (e.g. two) sets may be set within 'CSI-FrequencyOccupation' in Table 5. In other words, Table 5 used in the prior art can be changed to Table 7 below in the present disclosure.

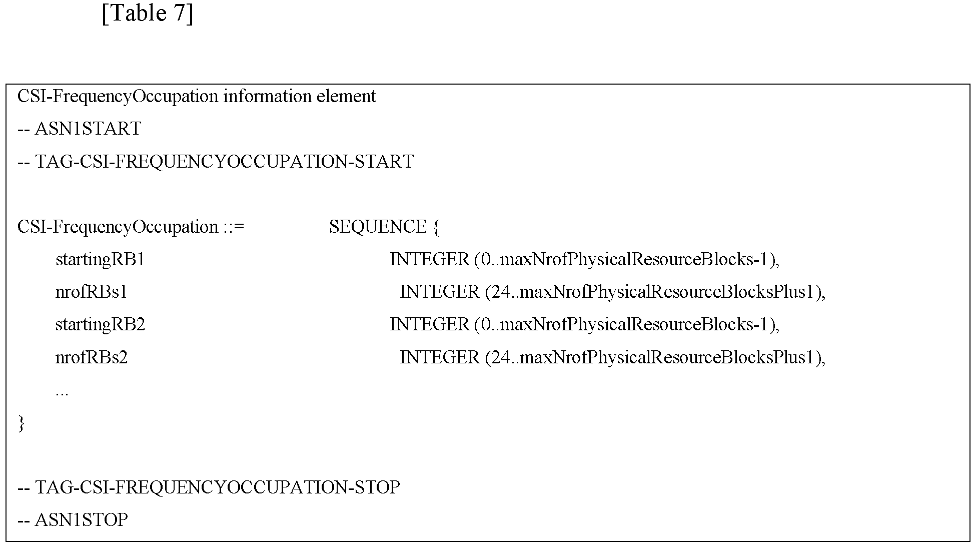

The UE may determine that each set of PRBs is made up of 'nrofRBs' contiguous PRBs from the PRB informed by 'startingRB'. For example, as shown in 'CSI-FrequencyOccupation' in Table 7, if {startingRB1, nrofRBs1} and {startingRB2, nrofRBs2} are set, the UE determines that 'nrofRBs1' contiguous PRB resources from the PRB informed by 'startingRB1' constitute the first PRB set, nrofRBs2 contiguous PRB resources from the PRB informed by 'startingRB2' as the second PRB set, and determines that the first and second PRB sets constitute the PRB resources of the CSI-RS.

As another example, multiple 'CSI-FrequencyOccupation' may be set within a 'CSI-RS-ResourceMapping' to configure the resources of multiple PRB sets that comprise a CSI-RS. Table 8 is a specific example of this.

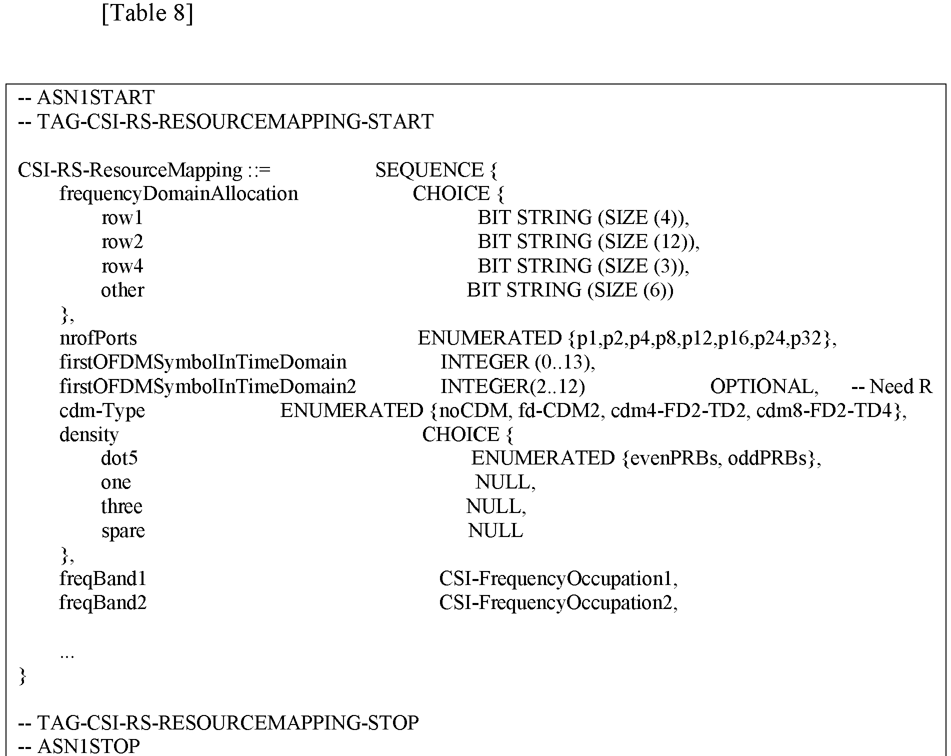

In the table above, 'density' indicates the density of CSI-RS resources measured within RE/port/PRB. 'firstOFDMSymbolInTimeDomain' is the time domain allocation within the PRB, and this field indicates the first OFDM symbol within the PRB used for CSI-RS. 'firstOFDMSymbolInTimeDomain2' represents the time domain allocation within the PRB. 'frequencyDomainAllocation' indicates frequency domain allocation within PRB.

'freqBand' is related to the aforementioned 'CSI-FrequencyOccupation'. PRB resources set through each 'CSI-FrequencyOccupation' may mean PRB resources constituting each PRB set. Each 'CSI-FrequencyOccupation' sets contiguous PRB resources, and the UE can determine the PRB sets configured through a plurality of'CSI-FrequencyOccupation' as PRB resources constituting the CSI-RS.

As exemplified in Table 8, if 'CSI-FrequencyOccupation1' and 'CSI-FrequencyOccupation2' are set in 'CSI-RS-ResourceMapping', the UE determines that the PRB resources informed by 'CSI-FrequencyOccupation1' and the PRB resources informed by 'CSI-FrequencyOccupation2' constitute the PRB resources of CSI-RS.

For CSI-RS for RRM measurement, 'startingPRBs' and 'nrofPRBs' for multiple (e.g., two) sets of PRBs may be set in 'csi-rs-MeasurementBW' in Table 6 to configure the resources of the multiple PRB sets to which CSI-RS is transmitted. In this case, the UE may determine that each set of PRBs comprises contiguous 'nrofPRBs' PRBs from the PRB indicated by 'startingPRB'.

For example, if {startingPRB 1, nrofPRBs1} and {startingPRB2, nrofPRBs2} are set within 'csi-rs-MeasurementBW', the UE shall determine that i) the PRBs 'nrofPRBs1' contiguous PRB resources from the PRB indicated by 'startingPRB1' constitute the first PRB set and ii) the PRBs 'nrofPRBs2' contiguous PRB resources from the PRB indicated by 'startingPRB2' constitute the second PRB set, and that the first and second PRB sets constitute the PRB resources of the CSI-RS.

As another example, in the case of CSI-RS for RRM measurement, multiple `csi-rs-MeasurementBWs' may be set up within 'CSI-RS-CellMobility' to set up multiple PRB set resources comprising CSI-RS. In this case, the PRB resources set via each `csi-rs-MeasurementBW' may refer to the PRB resources comprising each PRB set. In other words, each 'csi-rs-MeasurementBW' configures contiguous PRB resources, and the UE can determine the set of PRBs configured by multiple 'csi-rs-MeasurementBWs' as the PRB resources that constitute the CSI-RS. For example, if 'csi-rs-MeasurementBW1' and 'csi-rs-MeasurementBW2' are set within 'CSI-RS-CellMobility', the UE determines that the PRB resources informed by 'csi-rs-MeasurementBW1' (first set of PRBs) and the PRB resources informed by 'csi-rs-MeasurementBW2' (second set of PRBs) constitute the PRB resources of CSI-RS.

Using these methods, the network can set the frequency resources of the CSI-RS so that they do not include the unavailable frequency resources of the downlink.

Method 2. Set frequency resources not included in CSI-RS PRB resources.

Conventionally, the frequency resource constituting the CSI-RS (frequency resource on which the CSI-RS is transmitted) is configured as one PRB set composed of contiguous PRB resources, but in the present disclosure, when setting up PRB resources constituting CSI-RS, information on PRB resources not included in CSI-RS transmission frequency resources may be included.

That is, when setting up the CSI-RS, information for frequency resource excluded from the configuration of the CSI-RS can be set (explicitly/implicitly) along with the frequency resources that make up the CSI-RS. The UE may determine that among the PRB resources constituting the CSI-RS, PRB resources excluding frequency resources excluded from the configuration of the CSI-RS are actually used for transmission of the CSI-RS.

For example, within 'CSI-FrequencyOccupation' or within `CSI-RS-ResourceMapping', information about PRB resources that are excluded from CSI-RS transmission may be set together. The PRB resources that are excluded from CSI-RS transmission may consist of contiguous frequency PRB resources from a particular PRB resource.

For CSI-RS for RRM measurements, information about PRB resources that are excluded from CSI-RS transmission may be set together, e.g. within 'csi-rs-MeasurementBW' or within 'CSI-RS-CellMobility'. The PRB resources that are excluded from CSI-RS transmission may consist of contiguous frequency PRB resources from a particular PRB resource.

The setting of PRB resources excluded from CSI-RS transmission does not necessarily mean that they are excluded from CSI-RS transmission frequency resources, i.e., depending on the need/circumstance, the UE may exclude PRB resources excluded from CSI-RS transmission from CSI-RS transmission frequency resources only in some time resources.

For example, the UE may determine the resources set by 'startingRB' and 'nrofRBs' of 'CSI-FrequencyOccupation' as CSI-RS transmission frequency resources without considering the PRB resources that are excluded from CSI-RS transmission in the time resources set (or not set) by the network, and determine the actual CSI-RS transmission frequency resources by excluding the PRB resources that are excluded from CSI-RS transmission from the CSI-RS transmission frequency resources in the remaining time resources.

Alternatively, for example, the determination of CSI-RS transmission frequency resources in an FD slot may be different from that in an HD slot. In HD slots, the resource set by 'CSI-FrequencyOccupation' is determined as the CSI-RS transmission frequency resource without considering the PRB resources that are excluded from CSI-RS transmission, while in FD slots, the PRB resources that are excluded from CSI-RS transmission are excluded from the CSI-RS transmission frequency resource to determine the transmission frequency resource of CSI-RS.

Method 3. Determine the PRB resources of CSI-RS by excluding unavailable frequency resources (downlink unavailable frequency resources) that are not used for downlink.

In this method, the setting method for the frequency resources constituting the CSI-RS maintains the existing method, but the UE determines the PRB resource on which the CSI-RS is transmitted by excluding unavailable frequency resources not used for downlink.

For example, the UE shall consider/assume/determine that PRB resources which overlap with the DL unavailable frequency resources, among PRB resources configured by 'CSI-FrequencyOccupation' and/or 'csi-rs-MeasurementBW' for the transmission of the CSI-RS, are excluded from PRB resources over which the CSI-RS is transmitted (i.e., they are not used for the transmission of the CSI-RS).

Alternatively, the UE may determine that no CSI-RS is transmitted in a specific time resource (e.g., slot) if the frequency resource comprising the CSI-RS overlaps with an unavailable frequency resource that is not being used for downlink in the specific time resource.

For example, the UE may determine downlink unavailable frequency resources as follows.
1) Information about the downlink unavailable frequency resource, which is the frequency resource that is not used for downlink in the FD slot, may be set by the network through signals such as system information and RRC. This configuration information enables the UE to determine the downlink unavailable frequency resource.
2) Information about the first frequency resource, which is the frequency resource used for downlink in the FD slot, may be set from the network through signals such as system information, RRC, etc. The UE may determine that the frequency resources other than the first frequency resource are the downlink unavailable frequency resource.
3) Information about the second frequency resource, which is the frequency resource used for uplink in the FD slot, may be configured from the network through signals such as system information, RRC, etc. The UE may determine that the second frequency resource is the downlink unavailable frequency resource.
   In an FD slot, a guard frequency resource may exist between the first frequency resource used for downlink and the second frequency resource used for uplink. In such a case, the UE may determine that the second frequency resource and the guard frequency resource are the downlink unavailable frequency resource.
4) Contiguous/non-contiguous frequency resources comprising the bandwidth part (BWP) may be configured by the network. For the currently operating BWP, the UE may determine that the frequency resources that do not constitute the BWP are downlink unavailable frequency resources, i.e., the frequency resources other than the frequency resources that constitute the BWP are excluded from the PRB resources that constitute the CSI-RS.

On the other hand, the aforementioned downlink unavailable frequency resources may not always be applied/considered to the determination of CSI-RS transmission frequency resources. Depending on the need/circumstance, the UE may only consider the downlink unavailable frequency resources in some time resources to determine the CSI-RS transmission frequency resources.

For example, the UE may determine the resource set by 'CSI-FrequencyOccupation' and/or 'csi-rs-MeasurementBW' as the CSI-RS transmission frequency resource without considering the DL unavailable frequency resources in the time resource set (or not set) by the network, and determine the CSI-RS transmission frequency resource and whether to transmit in the remaining time resource by considering whether the DL unavailable frequency resources and the CSI-RS transmission frequency resources overlap.

Alternatively, for example, the determination of CSI-RS transmission frequency resources in an FD slot and in an HD slot may be applied differently. In HD slots, the resource set by 'CSI-FrequencyOccupation' and/or 'csi-rs-MeasurementBW' is determined to be the CSI-RS transmission frequency resource without considering the DL unavailable frequency resources, while in FD slots, the CSI-RS transmission frequency resource and whether it is transmitted or not is determined by considering whether the DL unavailable frequency resources and the CSI-RS transmission frequency resource overlap.

Alternatively, the network may set together at the time of CSI-RS configuration whether the UE shall: i) determine the resources set by 'CSI-FrequencyOccupation' and/or 'csi-rs-MeasurementBW' as CSI-RS transmission frequency resources without considering the downlink unavailable frequency resources, or ii) determine the CSI-RS transmission frequency resources by considering the downlink unavailable frequency resources. Based on these configurations, the UE can determine how to treat downlink unavailable frequency resources in CSI-RS transmission frequency resources.

### <5.2. Method for performing RRM measurement of a UE considering unavailable frequency resources>

The following measures exist in CSI-related RRM measurements. i) CSI-RSRP, ii) CSI-RSRQ, iii) CSI-SINR.

The information element (IE) 'CSI-RS-ResourceConfigMobility' can be used to set CSI-RS-based RRM measurements.

In some cases where CSI-RS for RRM measurements is transmitted in the FD slot, the frequency resource for CSI-RS transmission may include DL unavailable frequencies. In this case, frequency resources that cannot receive CSI-RS occur within the frequency resources where the UE performs RRM measurement.

Alternatively, the terminal may receive or determine the transmission frequency resource of the CSI-RS for the RRM measurement as described in Section 5.1 above in consideration of the DL unavailable frequency resource, i.e., the frequency resource for performing the RRM measurement may be configured to exclude the DL unavailable frequency resource. In this case, if the terminal is capable of filtering and receiving DL signals for only one continuous frequency resource region, and if the first frequency resource comprises a plurality (e.g., two) sets of continuous frequency resources, the terminal is capable of receiving DL signals transmitted in only one continuous frequency resource.

Therefore, when CSI-RS is transmitted through discontinuous frequency resources in consideration of DL unavailable frequency resources, the UE may not be able to receive CSI-RS on some of the frequency resources on which CSI-RS is transmitted. In other words, when the transmission frequency resources of the CSI-RS comprise a plurality of PRB sets (e.g., two PRB sets), each PRB set comprising contiguous PRB resources, the terminal may only be able to actually receive one or some of the PRB sets. In this case, the UE can perform RRM measurement by receiving the actual CSI-RS only for some PRB set resources, not for all resources on which the CSI-RS was transmitted.

In the present disclosure, a terminal capable of filtering and receiving DL signals for only one contiguous frequency resource region may be referred to as a single-band filtering terminal for ease of description.

In the following, it is proposed how the terminal receives CSI-RS when some of the frequency resources configured as transmission resources for CSI-RS are DL-unavailable frequency resources or when the terminal is unable to receive DL on some frequency resources within the frequency resources for which RRM measurements are performed due to capability issues of the terminal.

If the UE can receive CSI-RS only on some PRB resources among CSI-RS transmission resources, RRM measurement can be performed only on some band areas among the frequency resources for performing overall RRM measurement. For example, if the CSI-RS frequency resources consist of two PRB sets, and the terminal can receive CSI-RS for only one PRB set, the terminal can only perform RRM measurements for the frequency resources included in that one PRB set. In consideration of this, enhancement is needed in the operation of the terminal performing RRM measurement or measurement reporting.

5.2.1. CSI-RS resource determination method for RRM measurement.

If a terminal can receive CSI-RS on only some PRB resources among the CSI-RS transmission resources, the frequency resources on which the terminal can receive CSI-RS may be different from the frequency resources on which CSI-RS is set to be transmitted.

In the following, a method for a terminal to determine the reception frequency resource of a CSI-RS for performing RRM measurements is proposed.
1) Report of RRM measurable frequency resources.

In the method for determining a frequency resource for receiving CSI-RS for performing RRM measurements, the terminal may first report to the base station (gNB) information about a frequency resource capable of performing RRM measurements. Alternatively, the terminal may indirectly report information on a frequency resource capable of performing RRM measurements by indicating information on a frequency resource capable of performing DL reception or reception of CSI-RS instead of information on a frequency resource capable of performing RRM measurements.

Information about these frequency resources may be specifically as follows. In the following, a frequency resource capable of performing RRM measurements may mean a frequency resource capable of DL reception or capable of CSI-RS reception.

Method 1. The terminal may report the location information of the frequency resource on which the RRM measurement can be performed. In this case, the frequency location may consist of contiguous PRBs, and the frequency location may be reported by providing a 'starting PRB index' and a 'number of PRBs'. In this case, the number of PRBs from the 'starting PRB index' to the 'number of PRBs' becomes the location of the frequency resource where the terminal can perform RRM measurements.

Method 2. When the frequency resources to which the CSI-RS is transmitted comprise a plurality (e.g., two) of PRB sets, each PRB set comprising contiguous PRBs, the terminal may report information of a PRB set (e.g., a PRB set index) corresponding to a location of the frequency resources for which the terminal can perform RRM measurements. For example, when two PRB sets are configured, the PRB set consisting of PRBs with smaller indices corresponds to PRB set #0, and the PRB set consisting of PRBs with larger indices corresponds to PRB set #1, to set the indices of the PRB sets for which RRM measurements can be performed.

Method 3. When multiple (e.g., two) sets of 'startingPRB' and 'nrofPRBs' are configured in 'csi-rs-MeasurementBW', an index of a set corresponding to the location of the frequency resource where the UE can perform RRM measurement can be reported. For example, if {startingPRB 1, nrofPRBs1} and {startingPRB2, nrofPRBs2} are configured within 'csi-rs-MeasurementBW', the frequency resources corresponding to set #1 are the PRB resources 'nrofPRBs1' contiguous PRBs from the PRB pointed to by 'startingPRB1', and the frequency resources corresponding to set #2 are the PRB resources 'nrofPRBs2' contiguous PRBs from the PRB pointed to by 'startingPRB2'.

Method 4. When a plurality of 'csi-rs-MeasurementBWs' are configured within the 'CSI-RS-CellMobility' and the PRB resources configured through each 'csi-rs-MeasurementBW' refer to the PRB resources comprising each PRB set, the terminal may report the index of the 'csi-rs-MeasurementBW' corresponding to the location of the frequency resource for which the terminal can perform the RRM measurement.

The foregoing describes the terminal providing the base station with information of frequency resources on which RRM measurements can be performed, but this is not a limitation. That is, the above method can be extended so that the terminal provides the base station with information on frequency resources on which RRM measurement can be performed and/or information on frequency resources on which RRM measurement cannot be performed.

When the terminal reports the above information to the base station, the base station can refer to this information and set frequency resources for the terminal to receive CSI-RS for RRM measurement.

Alternatively, the terminal may report this information (information on the frequency resources on which the terminal can perform RRM measurements) when reporting RRM measurement results to the base station. In this case, the network can use this information to determine the frequency resource on which the terminal performed the RRM measurement.

2) Setting/determination of frequency resources to perform RRM measurements.

Now, a method for determining the reception frequency resource of the CSI-RS to perform RRM measurements is proposed.

First, the location of the reception frequency resource of the CSI-RS may be set by the network settings. For this purpose, when the base station sets the configurations for RRM measurements to the terminal, it can also set the frequency resource information for receiving CSI-RS. For example, such information may be contained in 'CSI-RS-CellMobility' or 'CSI-RS-ResourceConfigMobility' as described in the standard specification. Specifically, the location of the CSI-RS reception frequency resource of the terminal may be configured in the following ways.

Method 1. The location information of the frequency resource from which the terminal receives CSI-RS for RRM measurement may be set. In this case, the frequency location may consist of contiguous PRBs, and the frequency location may be set by providing a 'starting PRB index' and a 'number of PRBs'. In this case, the number of PRBs equal to the 'number of PRBs' from the 'starting PRB index' becomes the location of the frequency resource receiving CSI-RS.

While the above suggests that the base station provides the terminal with information on the frequency resources on which the terminal receives CSI-RS for RRM measurements, it may be extended to provide information on the resources on which the terminal receives and/or excludes CSI-RS from receiving CSI-RS. If the terminal is set to a frequency resource that excludes CSI-RS from reception, the terminal shall determine that it receives CSI-RS from the resources on which CSI-RS is set to be transmitted minus the frequency resource that excludes CSI-RS from reception.

Alternatively, the terminal can implicitly determine the location of the frequency resource for receiving CSI-RS for RRM measurement as follows.

Method 2. The UE may determine that frequency resources excluding DL unavailable frequency resources from the frequency resources configured to transmit CSI-RS for RRM measurement are frequency resources for receiving CSI-RS for RRM measurement. At this time, the location of DL unavailable frequency resources can be set through signaling such as SIB, RRC, etc. from the network.

At this time, the above configurations can be set within 'CSI-RS-CellMobility' and independently set for each cell (cell ID) performing RRM measurement. Alternatively, it can be set identically for all cells (cell ID) performing RRM measurements.

In this case, the frequency resources for receiving such CSI-RSs may be different for different time resources (e.g., slots). For example, the configurations for frequency resources receiving and/or excluding CSI-RSs from receiving such CSI-RSs may be limited to apply only to some slot resources. Information about these slot resources may be configured from the network. Alternatively, these slot resources may be slots that have been set/determined to be FD slots, i.e., the terminal may determine the location of frequency resources that receive CSI-RS for RRM measurements as described above only in these slot resources.

The terminal that has determined the reception frequency resource of the CSI-RS can perform RRM measurement using the CSI-RS transmitted on the corresponding frequency resource and report the measurement results.

5.5.2. RRM measurement method when CSI-RS is not received from some frequency resources within RRM measurement performance resources.

Within the frequency resources for which the terminal has been determined to perform RRM measurements or to receive CSI-RS for RRM measurements, the terminal may not be able to receive DL due to some resources being DL-unavailable frequency resources or due to issues such as the terminal's capabilities.

If a terminal is unable to receive CSI-RS on some/all frequency resources within a frequency resource that has been determined to perform RRM measurements or that has been determined to receive CSI-RS for RRM measurements, it may behave as follows

Operation A. If CSI-RS is not received in some/all of the frequency resources determined to perform RRM measurements or to receive CSI-RS in a specific time resource, the terminal may perform RRM measurements using only some of the frequency resources available for reception in the specific time resource.

Operation B. If a CSI-RS is not received in some/all of the frequency resources determined to perform RRM measurements or to receive CSI-RS in a specific time resource, the terminal shall not use that CSI-RS for RRM measurements in that specific time resource.

At this time, the terminal may determine and apply differently the operation method to be applied between Operation A and Operation B above depending on the situation/condition/configuration, etc. To this end, the terminal may report to the base station information about its capability to perform RRM measurements and/or CSI reporting using only some of the frequency resources determined to perform RRM measurement or to receive CSI-RS.

The terminal can determine its operation method using the following method.

Method 1. If the terminal has the capability for RRM measurement operation using only partial frequency resources and reports this capability, the terminal shall behave as in operation A above. On the other hand, if the terminal reports that such capability does not exist, the terminal shall behave as in operation B above.

Method 2. The terminal may have its operating method set by the base station's configurations, i.e., when the terminal fails to receive CSI-RS on some/all frequency resources determined to perform RRM measurements or to receive CSI-RS, the base station may indicate to the terminal which operating method of Operation A or Operation B applies to the terminal.

At this time, the base station may set the operation method of the terminal based on the capability information of the RRM measurement operation using only partial frequency resources reported by the terminal.

Specifically, these configurations can be set within 'CSI-RS-CellMobility' and independently set for each cell performing measurement (cell ID). Alternatively, it may be set identically for all cells (cell IDs) performing measurement.

If such configuration information is not received, the terminal may operate as in operation B above as a default operation.

Method 3. The terminal may determine its operation method according to the ratio of the amount of frequency resources that can receive CSI-RS (or the amount of frequency resources that cannot receive CSI-RS) among the frequency resources determined to perform RRM measurements.

For example, the terminal may determine that it operates as in operation A above if the ratio value of the frequency resources capable of receiving CSI-RS among the frequency resources determined to perform the RRM measurement is greater than or equal to alpha, and it may determine that it operates as in operation B above if the ratio value of the frequency resources capable of receiving CSI-RS is less than alpha.

Alternatively, the terminal may determine that it operates as in operation B above if the ratio value of the frequency resources that cannot receive CSI-RS among the frequency resources determined to perform CSI measurements is greater than or equal to beta, and operates as in operation A above if it is less than beta.

The alpha or beta value may be fixed to a specific value and specified in standard specifications. Alternatively, these alpha or beta values may be values set by the base station as RRC, etc.

Specifically, these configurations can be set within 'CSI-RS-CellMobility' and independently set for each cell performing measurement (cell ID). Alternatively, it may be set identically for all cells (cell IDs) performing measurement.

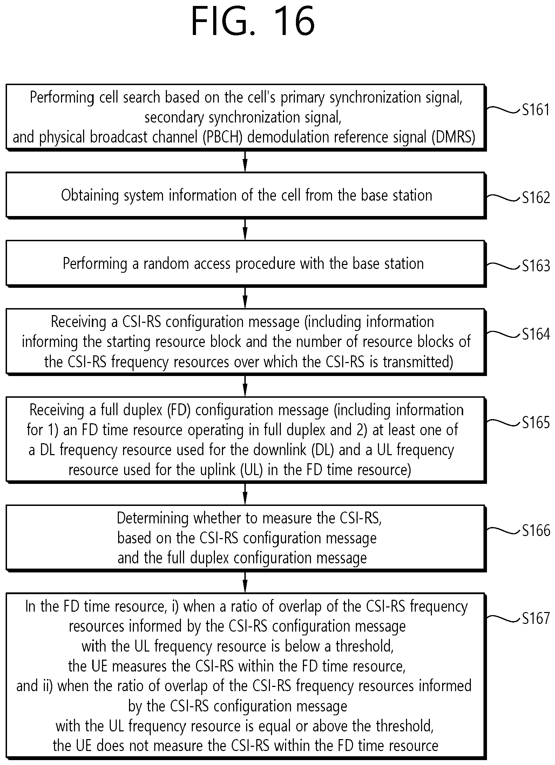

FIG. 16 is an example of a method of operating a terminal in a wireless communication system.

Referring to FIG. 16, the terminal performs cell search (S161). Specifically, the cell search may be a procedure in which the terminal acquires time and frequency synchronization with a cell and detects the cell ID (identity) of the cell. The terminal may perform cell search based on the cell's primary synchronization signal, secondary synchronization signal, and physical broadcast channel (PBCH) demodulation reference signal (DMRS).

The terminal obtains system information of the cell from the base station (S162).

The terminal performs a random access procedure with the base station (S163). The random access procedure may comprise: i) the terminal transmitting a random access preamble to the base station; ii) receiving a random access response from the base station; iii) performing a scheduled transmission using a scheduled uplink grant from the random access response; and iv) receiving a contention resolution message.

The UE receives a channel state information reference signal (CSI-RS) configuration message (S164). The CSI-RS configuration message may indicate, for example, the starting resource block and the number of resource blocks of the CSI-RS frequency resources over which the CSI-RS is transmitted. For example, the starting resource block and the number of resource blocks of the CSI-RS frequency resources may be indicated, as described in Table 5.

The UE receives a full duplex (FD) configuration message (S165). The full duplex configuration message may indicate an FD time resource operating in full duplex and a DL frequency resource used for the downlink (DL) and/or a UL frequency resource used for the uplink (UL) in the FD time resource (i.e., at least one of a DL frequency resource used for the downlink (DL) and a UL frequency resource used for the uplink (UL) in the FD time resource).

The full duplex (FD) configuration message may, for example, explicitly indicate the UL frequency resource (UL subband) and the DL frequency resource (DL subband) in the FD time resource, but may also indicate only the UL frequency resource (UL subband). The UE may then implicitly determine that the remaining frequency resources other than the UL frequency resource (UL subband) are DL frequency resources.

Alternatively, the full duplex (FD) configuration message may only indicate the DL frequency resource (DL subband) in the FD time resource, and the UE may implicitly determine that the remaining frequency resources other than the DL frequency resource (DL subband) are UL frequency resources.

Alternatively, the full duplex configuration message may inform (configure) 1) FD time resources operating in full duplex and/or 2) UL frequency resources (UL subband) used in uplink and/or DL frequency resources (DL subband) used in downlink. In this case, the UE may determine that 1) the FD time resource operating in full duplex is an FD time resource, or that 2) the time resource in which the UL subband (DL subband) is set is an FD time resource.

The UE determines whether to measure the CSI-RS based on the CSI-RS configuration message and the full duplex configuration message (S 166).

Specifically, in the FD time resource, i) when a ratio of overlap of the CSI-RS frequency resources informed by the CSI-RS configuration message with the UL frequency resource is below a threshold, the UE measures the CSI-RS within the FD time resource, and ii) when the ratio of overlap of the CSI-RS frequency resources informed by the CSI-RS configuration message with the UL frequency resource is equal or above the threshold, the UE does not measure the CSI-RS within the FD time resource (S 167).

In other words, it can be operated by combining operation B and method 3 of Section 5.2.2 described above.

The threshold may be set by a radio resource control (RRC) message.

The UE can measure the CSI-RS for radio resource management (RRM).

If the ratio of overlap of the CSI-RS frequency resources with the UL frequency resource is below the threshold, the UE may measure the CSI-RS in the CSI-RS frequency resources excluding the UL frequency resources.

If the ratio of overlap of the CSI-RS frequency resources with the UL frequency resource is equal or above the threshold, the UE may not measure the CSI-RS in the FD time resource.

The FD configuration message may include information on DL unavailable frequency resources which are frequency resources not used in downlink. The UE may assume that the CSI-RS is not transmitted in resources that overlap with the DL unavailable frequency resources among the CSI-RS frequency resources.

The UE may determine that the remaining frequency resources excluding the DL frequency resource are the DL unavailable frequency resources.

Alternatively, the UE may determine that the UL frequency resource is a DL unavailable frequency resource. In this case, the UE may operate assuming that the CSI-RS is not transmitted on the resources overlapping the DL unavailable frequency resource among the CSI-RS frequency resources indicated by the CSI-RS configuration message. Alternatively, the UE may operate assuming that the CSI-RS is not transmitted in the slot containing the DL unavailable frequency resource among the above CSI-RS frequency resources.

Conventionally, the transmission resources of a reference signal, such as a channel state information reference signal (CSI-RS), are set as consecutive frequency resources by the CSI-RS-related settings. In the time resource for performing the SB-FD operation, some of the frequency resources set for transmission of the CSI-RS may overlap with the uplink subband. In this case, CSI-RS cannot be transmitted properly in the uplink subband. If the UE nevertheless performs measurements or time/frequency tracking for radio resource management (RRM) on the transmission resources of CSI-RS including the uplink subband based on the above CSI-RS related settings, it shall not be able to perform proper measurements or time/frequency tracking.

According to the present disclosure, in a system supporting full duplex operation, e.g., SB-FD, RRM measurements and time/frequency tracking can be performed more accurately without changing the conventional reference signal setting method. The UE determines whether to perform CSI-RS measurements by considering, among the CSI-RS frequency resources indicated by the CSI-RS configuration message, the resources that overlap with the DL unavailable frequency resources (e.g., UL frequency resources) identified by the full duplex configuration message. That is, CSI-RS measurements are not performed in slots that cannot receive CSI-RS properly, and CSI-RS measurements are performed and reported only in slots that can receive CSI-RS properly. Thus, the accuracy of RRM measurements, time/frequency tracking can be improved, and the communication efficiency of the wireless communication system is increased as a result.

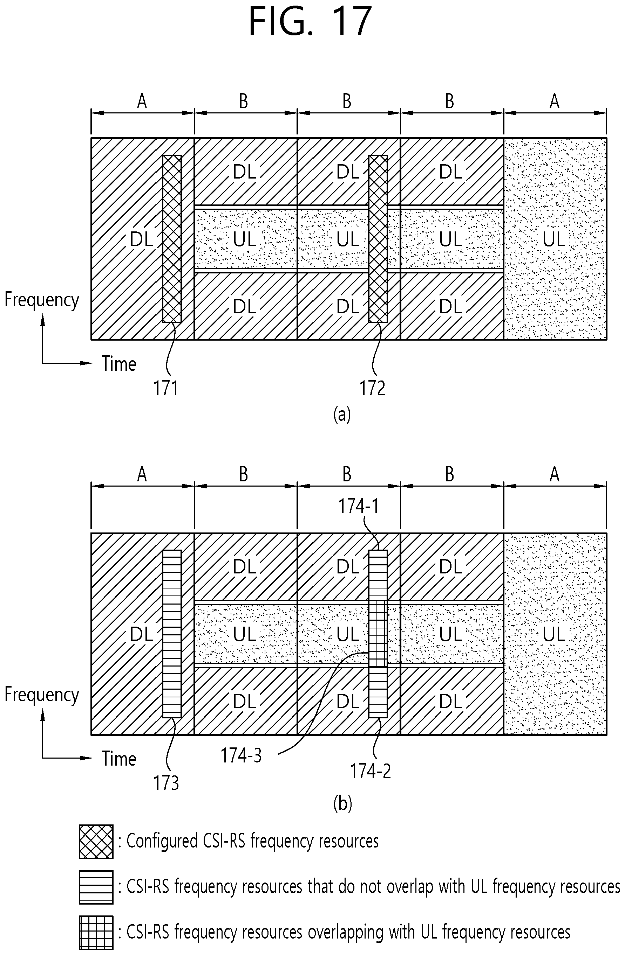

FIG. 17 illustrates CSI-RS frequency resources set for a UE, CSI-RS frequency resources that overlap with UL frequency resources, and CSI-RS frequency resources that do not overlap with UL frequency resources.

Referring to (a) of FIG. 17, the UE may be configured with CSI-RS frequency resources 171, 172 having specific periods. Among the CSI-RS frequency resources, the first CSI-RS frequency resource 171 may be located in an HD slot (DL resource) operating in half-duplex, and the second CSI-RS frequency resource 172 may be located in an FD slot (DL resource and UL resource coexist) operating in full-duplex.

In such a case, the UE does not perform CSI-RS reception and measurement on the CSI-RS frequency resources that overlap with the DL unavailable frequency resources, as shown in (b) of FIG. 17. That is, the UE receives and measures CSI-RS on the third CSI-RS frequency resource 173 of the above CSI-RS frequency resources because the third CSI-RS frequency resource 173 is located within the HD slot (DL resource) operating in half-duplex.

On the other hand, within the FD slot operating in full duplex (DL and UL resources coexist), it can be determined whether to perform CSI-RS measurement based on the ratio of resources overlapping with DL unavailable frequency resources (e.g., UL resources and guard frequency resources) among the configured CSI-RS frequency resources.

For example, in an FD slot, CSI-RS is measured in the FD slot if, among the CSI-RS frequency resources 174-1, 174-2, 174-3 indicated by the CSI-RS configuration message, the ratio of CSI-RS frequency resources 174-3 that overlap with UL frequency resources is lower than a threshold (set or predetermined in the standard).

On the other hand, if the ratio of CSI-RS frequency resources (174-3) that overlap with UL frequency resources among the CSI-RS frequency resources (174-1, 174-2, 174-3) indicated by the CSI-RS configuration message is equal to or above a threshold (set or predetermined in the standard), no CSI-RS measurement is performed in the FD slot.

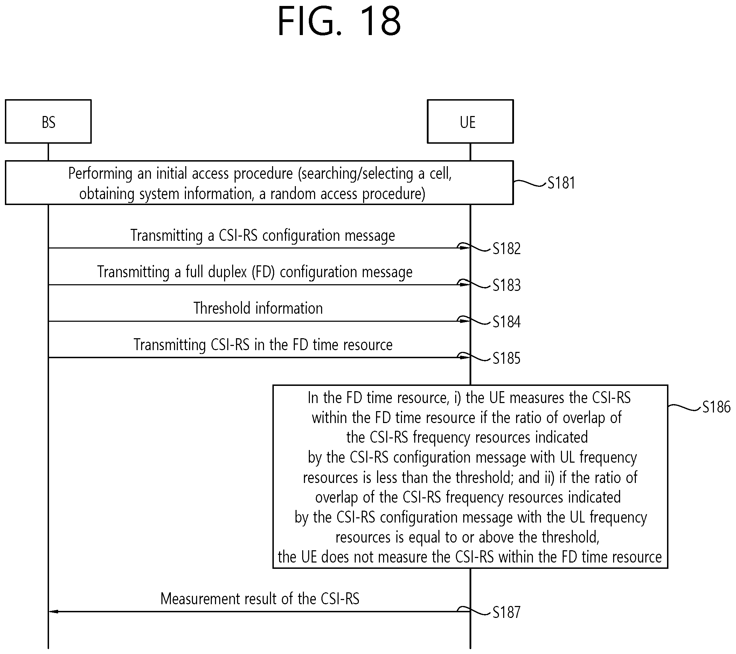

FIG. 18 illustrates the operation between the base station and the UE.

Referring to FIG. 18, the base station performs an initial access procedure with the UE (S181). For example, after searching/selecting a cell of the UE and obtaining system information, the base station performs a random access procedure with the UE. The random access procedure may include: i) the base station receiving a random access preamble from the UE; ii) the base station transmitting a random access response to the UE; iii) the base station receiving a transmission from the UE scheduled by the uplink grant included in the random access response; and iv) the base station transmitting a contention resolution message to the UE.

The base station transmits a CSI-RS configuration message to the UE (S182). The CSI-RS configuration message informs the starting resource block and the number of resource blocks of the CSI-RS frequency resources where CSI-RS is transmitted.

The base station transmits a full duplex (FD) configuration message to the UE (S183). For example, the full duplex configuration message may inform (configure) an FD time resource operating in full duplex and a DL frequency resource used for the downlink (DL) and a UL frequency resource used for the uplink (UL) in the FD time resource.

Alternatively, the full duplex configuration message may inform (set) 1) FD time resources operating in full duplex and/or 2) the time resource in which UL frequency resources (UL subband) used in uplink and/or DL frequency resources (DL subband) used in downlink exists. In this case, the UE may determine that 1) the FD time resource operating in full duplex is an FD time resource, or 2) the time resource in which the UL subband (DL subband) is set is an FD time resource.

The base station transmits threshold information to the UE (S184).

The base station transmits CSI-RS to the UE (S 185).

The UE, in the FD time resource, i) measures the CSI-RS within the FD time resource if the ratio of overlap of the CSI-RS frequency resources indicated by the CSI-RS configuration message with UL frequency resources is less than the threshold; and ii) if the ratio of overlap of the CSI-RS frequency resources indicated by the CSI-RS configuration message with the UL frequency resources is equal to or above the threshold, do not measure the CSI-RS within the FD time resource (S186).

The base station receives the measurement result of the CSI-RS from the UE (S187). For example, if the overlap ratio of the CSI-RS frequency resources indicated by the CSI-RS configuration message with the UL frequency resources for a specific FD slot is lower than a threshold, the measurement result of the CSI-RS in the specific FD slot may be received from the UE.

According to the methods described in FIGS. 16 to 18, in a system supporting full duplex operation, e.g., SB-FD, RRM measurements, time/frequency tracking can be performed more accurately without changing the conventional reference signal setup. That is, the accuracy of RRM measurements, time/frequency tracking can be increased, and as a result, the communication efficiency of the wireless communication system can be increased.

5.3. A method of performing time/frequency tracking of a UE considering unavailable frequency resources.

When a TRS for time/frequency tracking is transmitted in an FD slot, the frequency resource for transmitting the TRS may contain DL unavailable frequencies. In this case, the UE will have frequency resources that are unable to receive the TRS within the frequency resource performing time/frequency tracking.

Alternatively, the UE may be configured with or determine the transmission frequency resources of the TRS for time/frequency tracking as described in Section 5.1 above, taking into account the DL unavailable frequency resources. That is, the frequency resources for performing time/frequency tracking may be configured to exclude DL unavailable frequency resources. At this time, if the UE can filter and receive the DL signal only for one continuous frequency resource region, If the first frequency resource consists of a plurality (e.g., two) sets of continuous frequency resources, only a DL signal transmitted in one continuous frequency resource can be received. Therefore, when TRS is transmitted over non-contiguous frequency resources in consideration of DL unavailable frequency resources, the UE may not be able to receive TRS on some of the frequency resources on which TRS is transmitted.

That is, when the transmission frequency resources of the TRS are composed of a plurality (e.g., two) PRB sets, and each PRB set is composed of contiguous PRB resources, the UE may only be able to actually receive one or some of the PRB sets. In such cases, the UE may perform time/frequency tracking by actually receiving the TRS for only some of the PRB set resources, rather than for all of the resources for which the TRS was transmitted. The UE may be a single band filtering UE.

We propose a method for receiving TRS in a UE when some of the frequency resources set as transmission resources for TRS as described above are DL-unavailable frequency resources, or when the UE is unable to receive DL on some frequency resources within the frequency resources for which time/frequency tracking is performed due to problems caused by the UE's capability, etc.

If the UE can receive TRS only on some PRB resources among TRS transmission resources, time/frequency tracking can be performed only on some band areas among the frequency resources that perform overall time/frequency tracking. For example, if a CSI-RS frequency resource consists of two PRB sets, and the UE can only receive CSI-RS for one PRB set, the UE can only perform time/frequency tracking for the frequency resources contained in that one PRB set. In view of this, the operation of the UE performing time/frequency tracking needs to be improved.

5.3.1. How to determine TRS resources for time/frequency tracking

If the UE can only receive TRS on some PRB resources among the TRS transmission resources, the frequency resources on which the UE can receive TRS may be different from the frequency resources on which TRS is set to be transmitted.

This section proposes a method for the UE to determine the reception frequency resource of the TRS for performing time/frequency tracking.
1) Report of frequency resources capable of time/frequency tracking.

In a method for determining a reception frequency resource of a CSI-RS for performing time/frequency tracking, the UE may first report information about frequency resources that can perform time/frequency tracking to the base station. Alternatively, the UE may indirectly report information on frequency resources capable of time/frequency tracking by indicating information on frequency resources capable of DL reception or TRS reception instead of information on frequency resources capable of time/frequency tracking.

Information on these frequency resources may specifically be as follows. Hereinafter, frequency resources capable of performing time/frequency tracking may mean frequency resources capable of performing DL reception or TRS reception.

Method 1. The UE may report the location information of a frequency resource over which time/frequency tracking can be performed. In this case, the frequency location may consist of contiguous PRBs, and the frequency location may be reported by providing a 'starting PRB index' and a 'number of PRBs'. In this case, the number of PRBs from the 'starting PRB index' to the 'number of PRBs' is the location of the frequency resource for which time/frequency tracking can be performed.

Method 2. When the frequency resource over which the TRS is transmitted comprises a plurality (e.g., two) of PRB sets, each PRB set comprising contiguous PRBs, the UE may report information of a PRB set (e.g., a PRB set index) corresponding to a location of the frequency resource over which the UE can perform time/frequency tracking. For example, when two PRB sets are configured, the PRB set comprising the PRBs with the smaller indexes of the two PRB sets corresponds to PRB set #0, and the PRB set comprising the PRBs with the larger indexes corresponds to PRB set #1, thereby setting the index of the PRB set for which time/frequency tracking can be performed.

Method 3. When a plurality (e.g., two) sets of 'startingRBs' and 'nrofRBs' are configured within 'CSI-FrequencyOccupation', the UE may report the index of the set corresponding to the location of the frequency resource for which the UE can perform time/frequency tracking. For example, if {startingRB1, nrofRBs1} and {startingRB2, nrofRBs2} are set within 'CSI-FrequencyOccupation', the frequency resources corresponding to set #1 are the PRB resources 'nrofRBs1' contiguous PRBs from the PRB pointed to by 'startingRB1', and the frequency resources corresponding to set #2 are the PRB resources 'nrofRBs2' contiguous PRBs from the PRB pointed to by 'startingRB2'.

Method 4. A plurality of 'CSI-FrequencyOccupation' is configured within the 'CSI-RS-ResourceMapping', and the PRB resources set via each 'CSI-FrequencyOccupation' may refer to the PRB resources comprising each PRB set. At this time, the UE may report the index of the 'CSI-FrequencyOccupation' corresponding to the location of the frequency resource for which the UE can perform time/frequency tracking.

While the above suggests that the UE provides the base station with information of frequency resources that are capable of time/frequency tracking, it may be extended to provide information of frequency resources that are capable of time/frequency tracking and/or frequency resources that are not capable of time/frequency tracking.

When the UE reports the above information to the base station, the base station can refer to this information to set the frequency resource from which the UE receives TRS for time/frequency tracking.

2) Setting/determination of frequency resources to perform time/frequency tracking.

In the following, a method for determining a reception frequency resource of a TRS for performing time/frequency tracking is proposed. The UE may determine the reception frequency resource of the TRS for performing time/frequency tracking separately from the transmission frequency resource of the TRS, and the following methods may be applied to do so.

First, the location of the reception frequency resource of the TRS may be set by the network settings. For this purpose, when the base station sets TRS-related configurations to the UE, it may also set the frequency resource information from which the TRS is received. For example, such information may be included in the 'NZP-CSI-RS-ResourceSet' described in the standard specification. Specifically, the location of the reception frequency resource of the TRS of the UE can be set using the following method.

Method 1. The UE may set the location information of the frequency resource that receives TRS for time/frequency tracking. In this case, the frequency location may consist of contiguous PRBs, and the frequency location may be indicated by the 'starting PRB index' and 'number of PRBs'. In this case, the number of PRBs from the 'starting PRB index' to the 'number of PRBs' is the location of the frequency resource receiving the TRS.

While the above suggests that the base station provides the UE with information on the frequency resources that receive TRS for time/frequency tracking, it may be extended to provide information on the resources that the UE receives TRS from and/or excludes from receiving TRS. If the UE is set to exclude a frequency resource from receiving TRS, the UE determines that the TRS is received from the remaining resources excluding the frequency resources excluded from the reception of the TRS from the resources configured to transmit the TRS.

Alternatively, the UE can implicitly determine the location of the frequency resource for receiving TRS for CSI measurement as follows.

Method 2. The UE may determine that the frequency resource excluding the DL unavailable frequency resource from the frequency resource for which the TRS is set to be transmitted for time/frequency tracking is a frequency resource that receives the TRS for time/frequency tracking. At this time, the location of the DL unavailable frequency resource may be set through signalling such as SIB, RRC, or the like from the network.

At this time, the reception frequency resource of the TRS as described above may be specifically set to 'NZP-CSI-RS-ResourceSet'.

The reception frequency resources of the TRS as described above may be different for each time resource (e.g., slot). For example, configurations for frequency resources for receiving TRS and/or excluding TRS from reception as described above may be limited to apply only to some slot resources. Information about these slot resources may be configured from the network. Alternatively, these slot resources may be slots that are set/determined to be FD slots, i.e., the UE may determine the location of frequency resources that receive TRS for time/frequency tracking as described above only in these slot resources.

The UE that has determined the reception frequency resource of the TRS as described above can perform time/frequency tracking using the TRS transmitted on the corresponding frequency resource.

5.3.2. Tracking method when TRS is not received from some frequency resources within the time/frequency tracking resource

Within the frequency resources where the UE has been determined to perform time/frequency tracking or to receive TRS for time/frequency tracking, the UE may not be able to receive DL due to some resources being DL-unavailable frequency resources or due to issues with the UE's capabilities.

In this way, if the UE fails to receive TRS from some/all frequency resources within the frequency resources determined to perform time/frequency tracking or to receive TRS for time/frequency tracking, it is proposed to operate as follows.

Operation A. In a specific time resource, if TRS is not received from some/all of the frequency resources determined to perform time/frequency tracking or determined to receive TRS, the UE may perform time/frequency tracking using only some of the frequency resources available for reception in the specific time resource.

Operation B. In a specific time resource, if a TRS is not received from some/all of the frequency resources determined to perform time/frequency tracking or from the frequency resources determined to receive the TRS, the UE shall not use that TRS for time/frequency tracking in that specific time resource.

At this time, the UE may determine and apply differently the operation method to be applied among the above operation A and operation B depending on the situation/condition/configuration, etc. To this end, the UE may report to the base station information about its capability to perform time/frequency tracking using only some of the frequency resources that are determined to perform time/frequency tracking or to receive TRS.

The UE can determine its operation method using the following method.

Method 1. If the device has the capability for time/frequency tracking operation using only partial frequency resources and reports this capability, the device behaves as in operation A above. On the other hand, if the device reports that such a capability does not exist, the device behaves as in operation B above.

Method 2. The UE may have its operation method set by the base station's configurations, i.e., for the UE fails to receive TRS on some/all of the frequency resources that are determined to perform time/frequency tracking or that are determined to receive TRS, the base station may instruct the UE which of the above Operation A and Operation B applies to the UE.

At this time, the base station can set the operation method of the UE based on the capability information for time/frequency tracking operation using only some frequency resources reported by the UE.

If such configuration information is not received, the UE may operate as a default operation as in operation B above.

Method 3. The UE may determine its operation method according to the ratio of the amount of frequency resources that can receive TRS (or the ratio of the amount of frequency resources that cannot receive TRS) among the frequency resources determined to perform time/frequency tracking.

For example, the UE may determine that the UE operates as in operation A above if the ratio value of the frequency resources that can receive TRS among the frequency resources that are determined to perform time/frequency tracking is greater than or equal to alpha, and the UE may determine that the UE operates as in operation B above if the ratio value is less than the alpha. Alternatively, the UE may determine that the UE operates as in operation B above if the ratio value of the frequency resources that cannot receive TRS among the frequency resources determined to perform time/frequency tracking is greater than or equal to beta, and operates as in operation A above if the ratio value is less than the beta.

The alpha or beta value may be fixed to a specific value and specified in the standard specifications. Alternatively, these alpha or beta values can be set by the base station through RRC, etc.

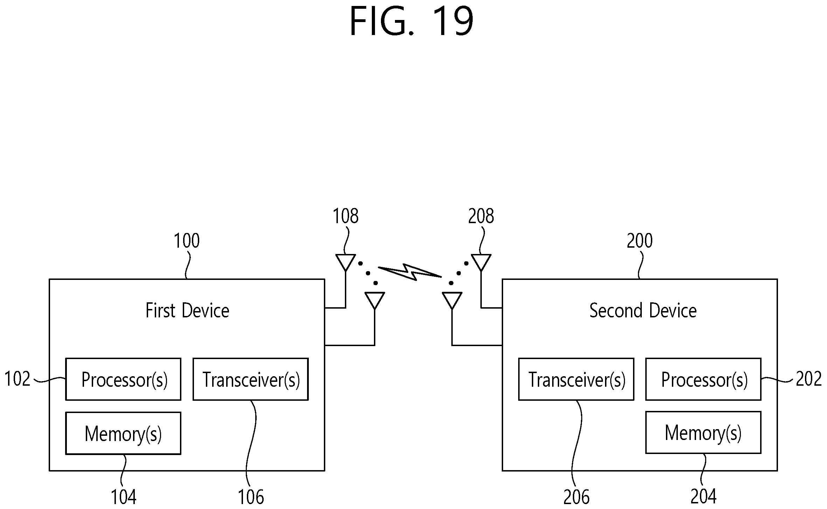

FIG. 19 illustrates a wireless device applicable to the present specification.

Referring to FIG. 19, a first wireless device 100 and a second wireless device 200 may transmit radio signals through a variety of RATs (e.g., LTE and NR).

The first wireless device 100 may include one or more processors 102 and one or more memories 104 and additionally further include one or more transceivers 106 and/or one or more antennas 108. The processors 102 may control the memory 104 and/or the transceivers 106 and may be configured to implement the descriptions, functions, procedures, proposals, methods, and/or operational flowcharts disclosed in this document. For example, the processors 102 may process information within the memory 104 to generate first information/signals and then transmit radio signals including the first information/signals through the transceivers 106. In addition, the processor 102 may receive radio signals including second information/signals through the transceiver 106 and then store information obtained by processing the second information/signals in the memory 104. The memory 104 may be connected to the processory102 and may store a variety of information related to operations of the processor 102. For example, the memory 104 may store software code including commands for performing a part or the entirety of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. The transceiver 106 may include a transmitter and/or a receiver. The transceiver 106 may be interchangeably used with a radio frequency (RF) unit. In the present specification, the wireless device may represent a communication modem/circuit/chip.

The second wireless device 200 may include one or more processors 202 and one or more memories 204 and additionally further include one or more transceivers 206 and/or one or more antennas 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signals and then transmit radio signals including the third information/signals through the transceiver 206. In addition, the processor 202 may receive radio signals including fourth information/signals through the transceiver 206 and then store information obtained by processing the fourth information/signals in the memory 204. The memory 204 may be connected to the processor 202 and may store a variety of information related to operations of the processor 202. For example, the memory 204 may store software code including commands for performing a part or the entirety of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. The transceiver 206 may include a transmitter and/or a receiver. The transceiver 206 may be interchangeably used with an RF unit. In the present specification, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The one or more processors 102 and 202 may be implemented with at least one computer readable medium (CRM) including instructions to be executed by at least one processor.

That is, at least one computer readable medium (CRM) having an instruction to be executed by at least one processor to perform operations includes: performing a cell search, the cell search being a procedure wherein the UE acquires time and frequency synchronization with a cell and detects a cell identity of the cell, based on a primary synchronization signal, a secondary synchronization signal and a physical broadcast channel (PBCH) demodulation reference signal (DMRS) of the cell, obtaining the system information of the above cell from the base station, performing a random access procedure with the base station, the random access procedure comprising: i) transmitting a random access preamble by the UE to the base station; ii) receiving a random access response from the base station; iii) performing a scheduled transmission using a scheduled uplink grant from the random access response; and iv) receiving a contention resolution message,
receiving a channel state information reference signal (CSI-RS) configuration message from the base station, the CSI-RS configuration message informing a starting resource block and a number of resource blocks of CSI-RS frequency resources where a CSI-RS is transmitted, receiving a full duplex (FD) configuration message from the base station, the FD configuration message informing an FD time resource operated in full duplex and a downlink (DL) frequency resource used for a DL and an uplink (UL) frequency resource used for a UL in the FD time resource, receiving the CSI-RS, and measuring the CSI-RS. Here, in the FD time resource, among the CSI-RS frequency resources informed by the CSI-RS configuration message, the CSI-RS is received and measured only on some CSI-RS frequency resources within the DL frequency resources, and on time resources other than the FD time resources, the CSI-RS is received and measured from the CSI-RS frequency resources informed by the CSI-RS configuration message.

The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. In addition, the one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. In addition, the one or more processors 102 and 202 may perform control so that the one or more transceivers 106 and 206 may receive user data, control information, or radio signals from one or more other devices. In addition, the one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

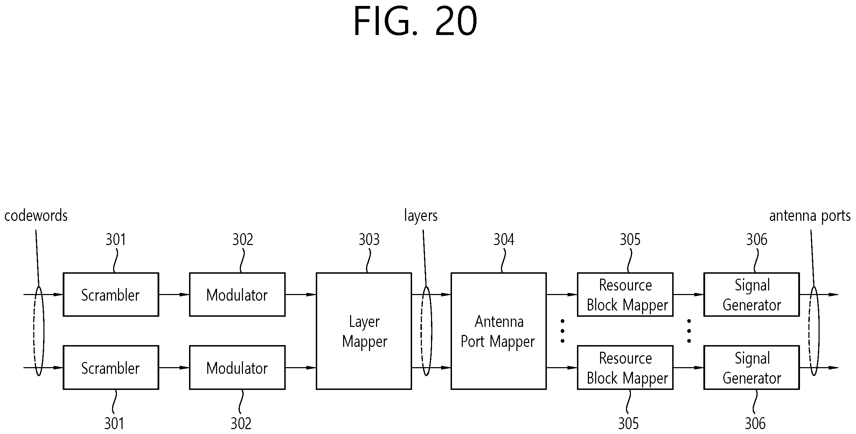

FIG. 20 shows an example of a structure of a signal processing module. Herein, signal processing may be performed in the processors 102 and 202 of FIG. 19.

Referring to FIG. 20, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

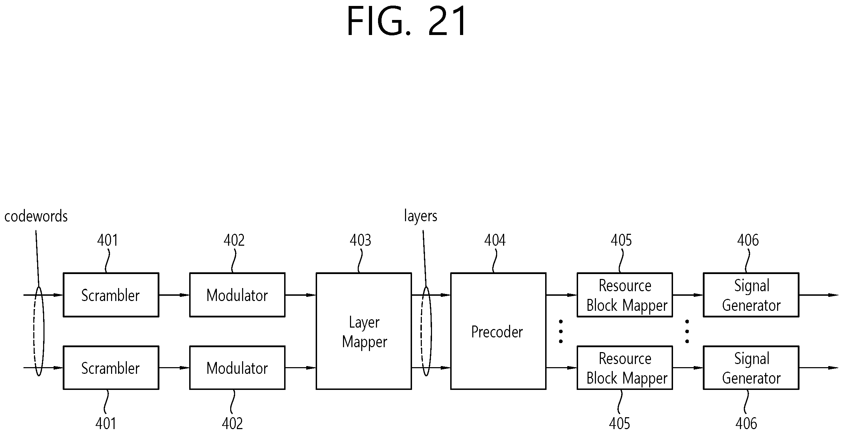

FIG. 21 shows another example of a structure of a signal processing module in a transmitting device. Herein, signal processing may be performed in a processor of a UE/BS, such as the processors 102 and 202 of FIG. 19.

Referring to FIG. 21, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

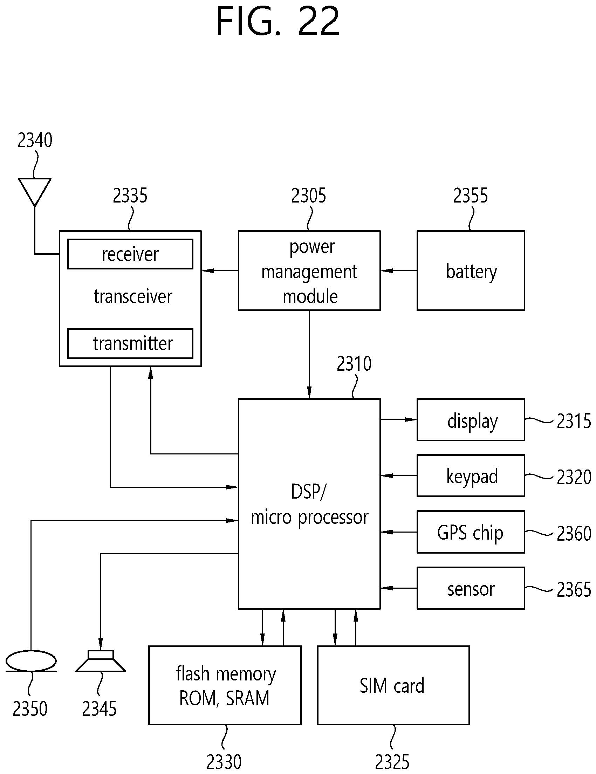

FIG. 22 illustrates an example of a wireless communication device according to an implementation example of the present disclosure.

Referring to FIG. 22, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 22 may be the processors 102 and 202 in FIG. 19.

The memory 2330 is connected to the processor 2310 and stores information related to operations of the processor. The memory may be located inside or outside the processor and connected to the processor through various techniques such as wired connection and wireless connection. The memory 2330 in FIG. 22 may be the memories 104 and 204 in FIG. 19.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 33 may be the transceivers 106 and 206 in FIG. 30.

Although not shown in FIG. 22, various components such as a camera and a universal serial bus (USB) port may be additionally included in the UE. For example, the camera may be connected to the processor 2310.

FIG. 22 is an example of implementation with respect to the UE and implementation examples of the present disclosure are not limited thereto. The UE need not essentially include all the components shown in FIG. 22. That is, some of the components, for example, the keypad 2320, the GPS chip 2360, the sensor 2365 and the SIM card 2325 may not be essential components. In this case, they may not be included in the UE.

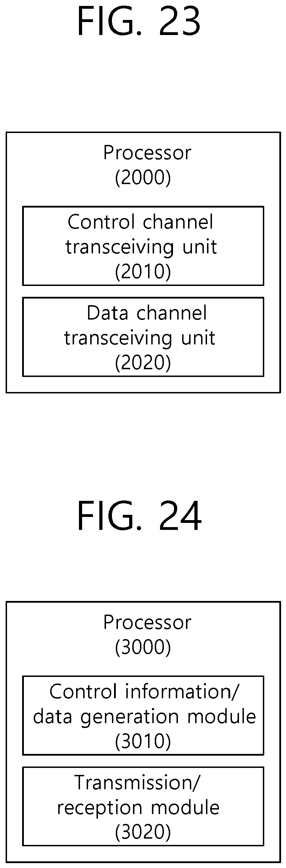

FIG. 23 shows an example of the processor 2000.

Referring to FIG. 23, the processor 2000 may include a control channel transceiving unit 2010 and a data channel transceiving unit 2020. For example, the processor 2000 may execute the methods described in FIGS. 16 to 18 from the UE perspective. For example, the processor 2000 performs a cell search, the cell search being a procedure wherein the UE acquires time and frequency synchronization with a cell and detects a cell identity of the cell, based on a primary synchronization signal, a secondary synchronization signal and a physical broadcast channel (PBCH) demodulation reference signal (DMRS) of the cell, obtains the system information of the above cell from the base station, performs a random access procedure with the base station, the random access procedure comprising: i) transmitting a random access preamble by the UE to the base station; ii) receiving a random access response from the base station; iii) performing a scheduled transmission using a scheduled uplink grant from the random access response; and iv) receiving a contention resolution message. And the processor (2000) receives a channel state information reference signal (CSI-RS) configuration message, the CSI-RS configuration message informing a starting resource block and a number of resource blocks of CSI-RS frequency resources where a CSI-RS is transmitted, receives a full duplex (FD) configuration message from the base station, the FD configuration message informing an FD time resource operated in full duplex and at least one of a downlink (DL) frequency resource used for a DL and an uplink (UL) frequency resource used for a UL in the FD time resource and determines, based on the CSI-RS configuration message and the FD configuration message, whether to measure the CSI-RS. More specifically, in the FD time resource, i) based on a ratio of overlap of the CSI-RS frequency resources informed by the CSI-RS configuration message with the UL frequency resource being below a threshold, the UE measures the CSI-RS within the FD time resource, and ii) based on the ratio of overlap of the CSI-RS frequency resources informed by the CSI-RS configuration message with the UL frequency resource being equal or above the threshold, the UE skips measuring the CSI-RS within the FD time resource.

The processor 2000 may be an example of the processors 102 and 202 of FIG. 19.

FIG. 24 shows an example of the processor 3000.

Referring to FIG. 24, the processor 3000 may include a control information/data generation module 3010 and a transmission/reception module 3020. The processor 3000 may execute the methods described in FIGS. 16 and 18 from the base station's or network's perspective. For example, the processor 3000 performs a random access procedure with a user equipment (UE). The random access procedure may comprise: i) the base station receiving a random access preamble from the UE; ii) the base station transmitting a random access response to the UE; iii) the base station receiving a transmission from the UE scheduled by an uplink grant included in the random access response; and iv) the base station transmitting a contention resolution message to the UE. And the processor (3000) transmits a channel state information reference signal (CSI-RS) configuration message to the UE, the CSI-RS configuration message informing a starting resource block and a number of resource blocks of CSI-RS frequency resources where a CSI-RS is transmitted. The processor (3000) transmits a full duplex (FD) configuration message to the UE, the FD configuration message informing an FD time resource operated in full duplex and at least one of a downlink (DL) frequency resource used for a DL and an uplink (UL) frequency resource used for a UL in the FD time resource. The processor (3000) transmits the CSI-RS to the UE and receives a measurement result of the CSI-RS from the UE. Whether or not the processor 3000 receives the measurement results of the CSI-RS in the FD time resource is dependent on the ratio of the CSI-RS frequency resources indicated by the CSI-RS configuration message in the FD time resource overlap with the UL frequency resources identified by the full duplex configuration message.

The processor 3000 may be an example of the processors 102 and 202 of FIG. 19.

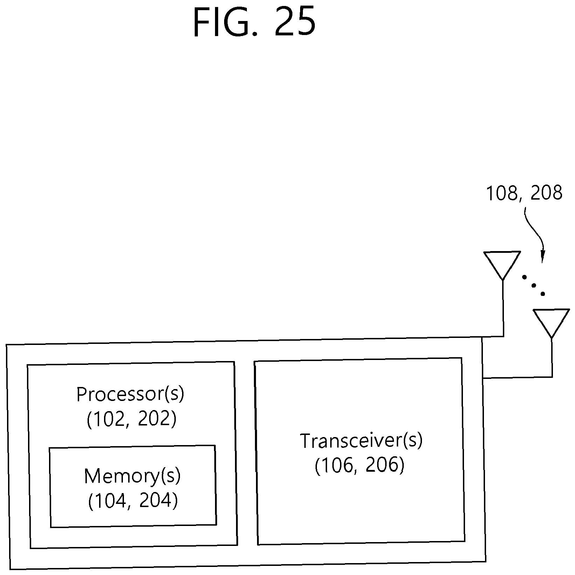

FIG. 25 shows another example of a wireless device.

Referring to FIG. 25, the wireless device may include one or more processors 102 and 202, one or more memories 104 and 204, one or more transceivers 106 and 206 and one or more antennas 108 and 208.

The example of the wireless device described in FIG. 25 is different from the example of the wireless described in FIG. 19 in that the processors 102 and 202 and the memories 104 and 204 are separated in FIG. 19 whereas the memories 104 and 204 are included in the processors 102 and 202 in the example of FIG. 25. That is, the processor and the memory may constitute one chipset.

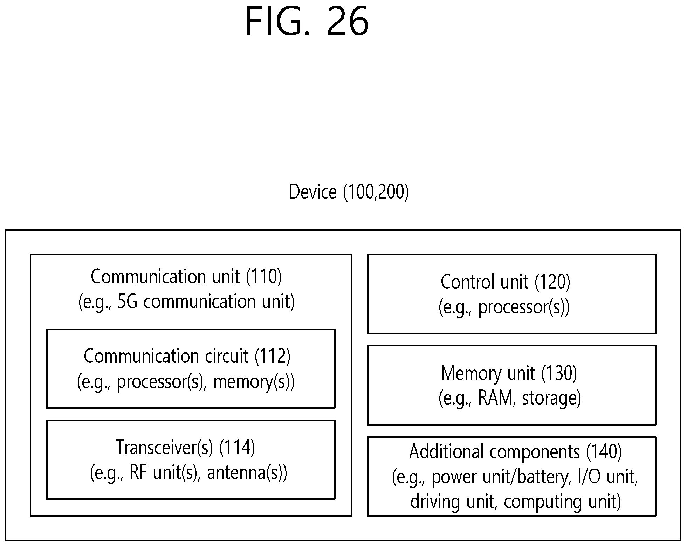

FIG. 26 shows another example of a wireless device applied to the present specification. The wireless device may be implemented in various forms according to a use-case/service.

Referring to FIG. 26, wireless devices 100 and 200 may correspond to the wireless devices 100 and 200 of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. In addition, the control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot 100a of FIG. 34, the vehicles 100b-1, 100b-2 of FIG. 34, the XR device 100c of FIG. 34, the hand-held device 100d of FIG. 34, the home appliance 100e of FIG. 34, the IoT device 100f of FIG. 34, a digital broadcast UE, a hologram device, a public safety device, an MTC device, a medicine device, a fintech device (or a finance device), a security device, a climate/environment device, the AI server/device 400 of FIG. 34, the BSs 200 of FIG. 34, a network node, etc. The wireless device may be used in a mobile or fixed place according to a use-example/service.

In FIG. 26, various elements, components, units/parts, and/or modules within the wireless devices 100 and 200 may be entirely interconnected through a wired interface, or at least a portion may be wirelessly connected through the communication unit 110. For example, within the wireless devices 100 and 200, the control unit 120 and the communication unit 110 may be connected by wire, and the control unit 120 and the first unit (e.g., 130 and 140) may be connected through the communication unit 110. Additionally, each element, component, unit/part, and/or module within the wireless devices 100 and 200 may further include one or more elements. For example, the control unit 120 may be comprised of one or more processor sets. For example, the control unit 120 may be comprised of a communication control processor, an application processor, an electronic control unit (ECU), a graphics processing processor, and a memory control processor. As another example, the memory unit 130 includes random access memory (RAM), dynamic RAM (DRAM), read only memory (ROM), flash memory, volatile memory, and non-volatile memory. volatile memory) and/or a combination thereof.

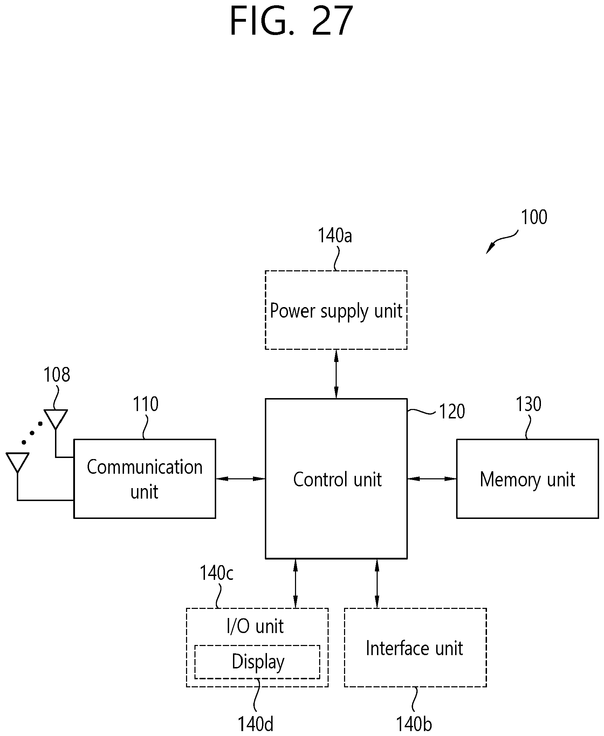

FIG. 27 illustrates a hand-held device applied to the present specification. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 27, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c respective correspond to the blocks 110 to 130/140 of FIG. 26.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. In addition, the memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

For example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. In addition, the communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

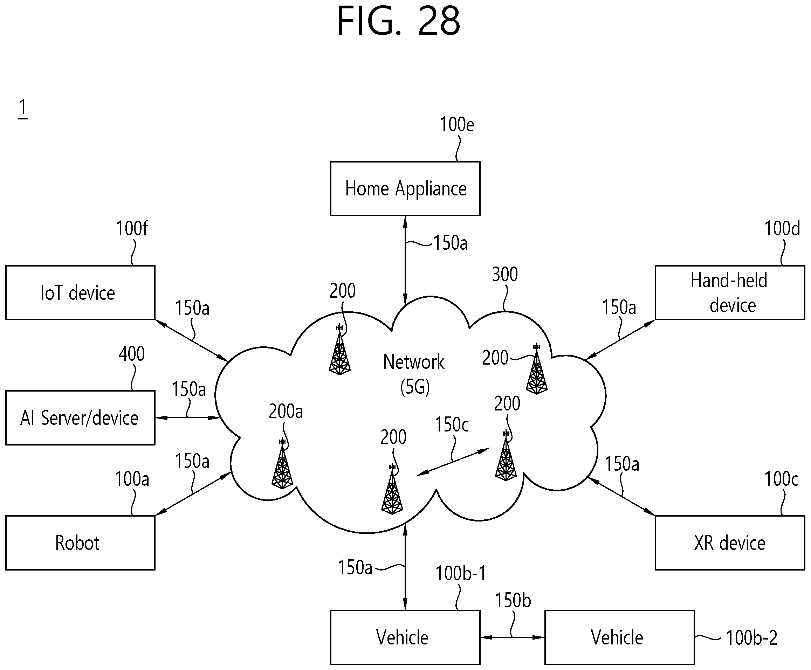

FIG. 28 illustrates a communication system 1 applied to the present specification.

Referring to FIG. 28, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication(e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, the NR supports multiple numerologies (or subcarrier spacing (SCS)) for supporting diverse 5G services. For example, if the SCS is 15kHz, a wide area of the conventional cellular bands may be supported. If the SCS is 30kHz/60kHz, a dense-urban, lower latency, and wider carrier bandwidth is supported. If the SCS is 60kHz or higher, a bandwidth greater than 24.25GHz is used in order to overcome phase noise.

An NR frequency band may be defined as a frequency range of two types (FR1, FR2). Values of the frequency range may be changed. For example, the frequency range of the two types (FR1, FR2) may be as shown below in Table 9. For convenience of explanation, among the frequency ranges that are used in an NR system, FR1 may mean a "sub 6GHz range", and FR2 may mean an "above 6GHz range" and may also be referred to as a millimeter wave (mmW).

**[Table 9]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, as shown in Table 10 below, FR1 may include a band in the range of 410MHz to 7125MHz. That is, FR1 may include a frequency band of at least 6GHz (or 5850, 5900, 5925 MHz, and so on). For example, a frequency band of at least 6GHz (or 5850, 5900, 5925 MHz, and so on) included in FR1 may include an unlicensed band. The unlicensed band may be used for diverse purposes, e.g., the unlicensed band for vehicle-specific communication (e.g., automated driving).

**[Table 10]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

## Claims

1. A method of operating a user equipment (UE) in a wireless communication system, the method comprising:
performing a cell search to obtain a time and frequency synchronization with a cell;
obtaining system information of the cell from a base station;
performing a random access procedure with the base station;
receiving a channel state information reference signal (CSI-RS) configuration message from the base station, wherein the CSI-RS configuration message informs a starting resource block and a number of resource blocks of CSI-RS frequency resources where a CSI-RS is transmitted;
receiving a full duplex (FD) configuration message from the base station, wherein the FD configuration message informs an FD time resource operated in full duplex and at least one of a downlink (DL) frequency resource used for a DL and an uplink (UL) frequency resource used for a UL in the FD time resource; and
determining, based on the CSI-RS configuration message and the FD configuration message, whether to measure the CSI-RS,
wherein, in the FD time resource, i) based on a ratio of overlap of the CSI-RS frequency resources informed by the CSI-RS configuration message with the UL frequency resource being below a threshold, the UE measures the CSI-RS within the FD time resource, and ii) based on the ratio of overlap of the CSI-RS frequency resources informed by the CSI-RS configuration message with the UL frequency resource being equal or above the threshold, the UE skips measuring the CSI-RS within the FD time resource.

2. The method of claim 1, wherein the threshold is configured by a radio resource control (RRC) message.

3. The method of claim 1, wherein the CSI-RS is measured for radio resource management (RRM).

4. The method of claim 1, wherein based on the ratio of overlap of the CSI-RS frequency resources with the UL frequency resource being below the threshold, the CSI-RS is measured on remaining frequency resources excluding the UL frequency resource from the CSI-RS frequency resources.

5. The method of claim 1, wherein based on the ratio of overlap of the CSI-RS frequency resources with the UL frequency resource being equal or above the threshold, the CSI-RS is not measured in the FD time resource.

6. The method of claim 1, wherein the FD configuration message includes information on DL unavailable frequency resources which are frequency resources not used in downlink.

7. The method of claim 6, wherein the UE assumes that the CSI-RS is not transmitted in resources that overlap with the DL unavailable frequency resources among the CSI-RS frequency resources.

8. The method of claim 1, wherein remaining frequency resources excluding the DL frequency resource are determined to be DL unavailable frequency resources.

9. The method of claim 1, wherein the UL frequency resource is determined to be a DL unavailable frequency resource.

10. A user equipment (UE), the UE comprising:
a transceiver;
at least one memory; and
at least one processor operably coupled to the at least one memory and the transceiver, wherein the processor is adapted to:
perform a cell search to obtain a time and frequency synchronization with a cell;
obtain system information of the cell from a base station;
perform a random access procedure with the base station;
receive a channel state information reference signal (CSI-RS) configuration message from the base station, wherein the CSI-RS configuration message informs a starting resource block and a number of resource blocks of CSI-RS frequency resources where a CSI-RS is transmitted;
receive a full duplex (FD) configuration message from the base station, wherein the FD configuration message informs an FD time resource operated in full duplex and at least one of a downlink (DL) frequency resource used for a DL and an uplink (UL) frequency resource used for a UL in the FD time resource; and
determine, based on the CSI-RS configuration message and the FD configuration message, whether to measure the CSI-RS,
wherein, in the FD time resource, i) based on a ratio of overlap of the CSI-RS frequency resources informed by the CSI-RS configuration message with the UL frequency resource being below a threshold, the UE measures the CSI-RS within the FD time resource, and ii) based on the ratio of overlap of the CSI-RS frequency resources informed by the CSI-RS configuration message with the UL frequency resource being equal or above the threshold, the UE skips measuring the CSI-RS within the FD time resource.

11. The UE of claim 10, wherein the threshold is configured by a radio resource control (RRC) message.

12. The UE of claim 10, wherein the CSI-RS is measured for radio resource management (RRM).

13. The UE of claim 10, wherein based on the ratio of overlap of the CSI-RS frequency resources with the UL frequency resource being below the threshold, the CSI-RS is measured on remaining frequency resources excluding the UL frequency resource from the CSI-RS frequency resources.

14. The UE of claim 10, wherein based on the ratio of overlap of the CSI-RS frequency resources with the UL frequency resource being equal or above the threshold, the CSI-RS is not measured in the FD time resource.

15. The UE of claim 10, wherein the FD configuration message includes information on DL unavailable frequency resources which are frequency resources not used in downlink.

16. The UE of claim 15, wherein the UE assumes that the CSI-RS is not transmitted in resources that overlap with the DL unavailable frequency resources among the CSI-RS frequency resources.

17. The UE of claim 10, wherein remaining frequency resources excluding the DL frequency resource are determined to be DL unavailable frequency resources.

18. The UE of claim 10, wherein the UL frequency resource is determined to be a DL unavailable frequency resource.

19. An apparatus of a user equipment (UE), the apparatus comprising:
at least one memory; and
at least one processor operably coupled to the at least one memory,
wherein the processor is adapted to:
perform a cell search to obtain a time and frequency synchronization with a cell;
obtain system information of the cell from a base station;
perform a random access procedure with the base station;
receive a channel state information reference signal (CSI-RS) configuration message from the base station, wherein the CSI-RS configuration message informs a starting resource block and a number of resource blocks of CSI-RS frequency resources where a CSI-RS is transmitted;
receive a full duplex (FD) configuration message from the base station, wherein the FD configuration message informs an FD time resource operated in full duplex and at least one of a downlink (DL) frequency resource used for a DL and an uplink (UL) frequency resource used for a UL in the FD time resource; and
determine, based on the CSI-RS configuration message and the FD configuration message, whether to measure the CSI-RS,
wherein, in the FD time resource, i) based on a ratio of overlap of the CSI-RS frequency resources informed by the CSI-RS configuration message with the UL frequency resource being below a threshold, the UE measures the CSI-RS within the FD time resource, and ii) based on the ratio of overlap of the CSI-RS frequency resources informed by the CSI-RS configuration message with the UL frequency resource being equal or above the threshold, the UE skips measuring the CSI-RS within the FD time resource.

20. At least one computer readable medium (CRM) having instructions to be executed by at least one processor to perform operations includes:
performing a cell search to obtain a time and frequency synchronization with a cell;
obtaining system information of the cell from a base station;
performing a random access procedure with the base station;
receiving a channel state information reference signal (CSI-RS) configuration message from the base station, wherein the CSI-RS configuration message informs a starting resource block and a number of resource blocks of CSI-RS frequency resources where a CSI-RS is transmitted;
receiving a full duplex (FD) configuration message from the base station, wherein the FD configuration message informs an FD time resource operated in full duplex and at least one of a downlink (DL) frequency resource used for a DL and an uplink (UL) frequency resource used for a UL in the FD time resource; and
determining, based on the CSI-RS configuration message and the FD configuration message, whether to measure the CSI-RS,
wherein, in the FD time resource, i) based on a ratio of overlap of the CSI-RS frequency resources informed by the CSI-RS configuration message with the UL frequency resource being below a threshold, the UE measures the CSI-RS within the FD time resource, and ii) based on the ratio of overlap of the CSI-RS frequency resources informed by the CSI-RS configuration message with the UL frequency resource being equal or above the threshold, the UE skips measuring the CSI-RS within the FD time resource.

21. A method of operating a base station in a wireless communication system, the method comprising:
performing a random access procedure with a user equipment (UE);
transmitting a channel state information reference signal (CSI-RS) configuration message to the UE, wherein the CSI-RS configuration message informs a starting resource block and a number of resource blocks of CSI-RS frequency resources where a CSI-RS is transmitted;
transmitting a full duplex (FD) configuration message to the UE, wherein the FD configuration message informs an FD time resource operated in full duplex and at least one of a downlink (DL) frequency resource used for a DL and an uplink (UL) frequency resource used for a UL in the FD time resource;
transmitting the CSI-RS to the UE; and
receiving a measurement result of the CSI-RS from the UE,
wherein, whether to receive the measurement result of the CSI-RS in the FD time resource depends on a ratio of overlap of the CSI-RS frequency resources informed by the CSI-RS configuration message with the UL frequency resource.

22. A base station (BS), the BS comprising:
a transceiver;
at least one memory; and
at least one processor operably coupled to the at least one memory and the transceiver, wherein the processor is adapted to:
perform a random access procedure with a user equipment (UE);
transmit a channel state information reference signal (CSI-RS) configuration message to the UE, wherein the CSI-RS configuration message informs a starting resource block and a number of resource blocks of CSI-RS frequency resources where a CSI-RS is transmitted;
transmit a full duplex (FD) configuration message to the UE, wherein the FD configuration message informs an FD time resource operated in full duplex and at least one of a downlink (DL) frequency resource used for a DL and an uplink (UL) frequency resource used for a UL in the FD time resource;
transmit the CSI-RS to the UE; and
receive a measurement result of the CSI-RS from the UE,
wherein, whether to receive the measurement result of the CSI-RS in the FD time resource depends on a ratio of overlap of the CSI-RS frequency resources informed by the CSI-RS configuration message with the UL frequency resource.
